# EUROPÄISCHE PATENTSCHRIFT

(11) **EP 3 853 130 B1**
(45) Veröffentlichungstag und Bekanntmachung des Hinweises auf die Patenterteilung: **22.11.2023**
(21) Anmeldenummer: 19749256.4
(22) Anmeldetag: 19.07.2019
(51) Int. Cl.: B65B 5/10, A61J 7/00, G07F 17/00, B65B 35/08, B65B 35/44, B65G 1/137

(54) **TABLETTENPORTIONIERVORRICHTUNG**
TABLET PORTIONING DEVICE
DISPOSITIF DE MISE EN PORTIONS DE COMPRIMÉS

(30) Priorität: 21.09.2018 DE 102018216179
(43) Veröffentlichungstag der Anmeldung: 28.07.2021
(73) Patentinhaber: Gebr. Willach GmbH, 53809 Ruppichteroth (DE)
(72) Erfinder: SCHMIDT, Klaus-Dieter, 51588 Nümbrecht (DE); WILLACH, Jens, 53783 Eitorf (DE)
(74) Vertreter: dompatent von Kreisler Selting Werner - Partnerschaft von Patent- und Rechtsanwälten mbB
(86) Internationale Anmeldenummer: PCT/EP2019/069576
(87) Internationale Veröffentlichungsnummer: WO 2020/057807

(56) Entgegenhaltungen:
- EP-A1- 3 081 500
- EP-A1- 3 081 927
- US-A1- 2018 261 314

## Beschreibung

Die vorliegende Erfindung betrifft eine Tablettenportioniervorrichtung zum Portionieren von Tablettenportionen.

In Krankenhäusern oder Apotheken einiger Länder werden Tabletten an Patienten bzw. Kunden nicht in vom Hersteller vorgepackten Gebinden abgegeben, sondern die Tabletten werden aus größeren Gebinden patienten- bzw. kundenspezifisch portioniert. Eine Variante hierbei ist es, Tabletten einer Sorte oder verschiedener Sorten zu Portionen zusammenzustellen, die für einen bestimmten Einnahmezeitraum des Patienten oder Kunden vorgesehen sind. Beispielsweise können Tablettenportionen für einen Einnahmezeitpunkt zusammengestellt werden.

Bekannte Tablettenportioniervorrichtungen bestehen hierbei aus mehreren Tablettenbehältern und einer unterhalb der Tablettenbehälter angeordneten Sammelvorrichtung mit Ausgabevorrichtung sowie einer Verpackungsvorrichtung zum Verpacken von Tablettenportionen. Die Tabletten werden aus den Tablettenbehältern ausgegeben und portionsweise in der Sammelvorrichtung gesammelt und an die Verpackungsvorrichtung übergeben. Die Verpackungsvorrichtung verpackt dann die Tablettenportionen in Einzelverpackungen wie beispielsweise durchsichtigen Beuteln. Diese können dann mit Kunden- oder Patienteninformationen versehen werden.

Neben der Abfüllung in kleine Beutel können Tablettenportionen auch in Verpackungen mit mehreren Fächern eingefüllt werden, wobei die Tablettenportionen jeweils in ein Fach eingefüllt werden. Derartige Verpackungen sind beispielsweise in Tablettform (Blisterkarten) und bieten Platz für Tablettenportionen für mehrere Einnahmezeitpunkte.

Die vorbekannten Tablettenportioniervorrichtungen, mit denen Tablettenportionen in einzelne Beutel eingefüllt werden, haben jedoch den Nachteil, dass bei einer Unterbrechung des Einfüllvorgangs aufgrund einer Störung in der Verpackungsvorrichtung, beispielsweise wenn eine Rolle mit Tablettenbeuteln ersetzt werden muss, der gesamte Portioniervorgang unterbrochen werden muss. Ferner ist eine derartige Tablettenportioniervorrichtung auch lediglich für eine Abfüllart, beispielsweise eine Abfüllung in Beuteln, verwendbar und somit wenig flexibel einsetzbar.

Bei den vorbekannten Tablettenportioniervorrichtungen wird auch bei einem Austausch von einem oder mehreren Tablettenbehältern der Portionier- und Verpackungsvorgang unterbrochen, sofern zumindest Tabletten aus den auszutauschenden Tablettenbehältern benötigt werden. Eine Tablettenportioniervorrichtung mit den Merkmalen des Oberbegriffs des Anspruch 1 ist aus EP 3 081 500 A1 bekannt.

Es ist daher die Aufgabe der vorliegenden Erfindung, eine Tablettenportioniervorrichtung der eingangs genannten Art zu schaffen, die flexibel für unterschiedliche Verpackungstypen einsetzbar ist, wobei die Tablettenportioniervorrichtung einen einfachen Aufbau besitzt und ein Portionier- oder Verpackungsvorgang bei einem Austausch der Verpackungen oder der Tablettenbehälter nicht unmittelbar unterbrochen werden muss.

Die Erfindung ist definiert durch eine Tablettenportioniervorrichtung gemäß Anspruch 1.

Die erfindungsgemäße Tablettenportioniervorrichtung weist mehrere Tablettenbehälter auf und eine unterhalb der Tablettenbehälter angeordnete Sammelvorrichtung mit Ausgabevorrichtung sowie eine Verpackungsvorrichtung zum portionsweise Verpacken von Tablettenportionen. Die Sammelvorrichtung empfängt Tabletten aus den Tablettenbehältern und gibt diese über die Ausgabevorrichtung als Tablettenportionen aus, wobei eine sich in eine Förderrichtung erstreckende Fördervorrichtung mit mehreren Förderfächern die Ausgabevorrichtung mit der Verpackungsvorrichtung verbindet. Die Ausgabevorrichtung gibt jeweils eine Tablettenportion in eines der Förderfächer aus und die Fördervorrichtung transportiert die Tablettenportionen zu der Verpackungsvorrichtung. Die Fördervorrichtung weist vorzugsweise eine Ausgabeeinrichtung auf, über die die Tablettenportionen portionsweise an die Verpackungsvorrichtung übergeben werden.

Mit anderen Worten: Die Tablettenportionen werden von der Sammelvorrichtung und der Ausgabevorrichtung portioniert und in die Förderfächer abgegeben und mittels der Ausgabeeinrichtung wird jede Tablettenportion als ganze Portion an die Verpackungsvorrichtung übergeben.

Vorzugsweise wird jede Tablettenportion über die Ausgabeeinrichtung zumindest teilweise mittels Schwerkraft an die Verpackungsvorrichtung übergeben. Beispielsweise kann vorgesehen sein, dass die Ausgabeeinrichtung ein Förderfach entleert oder das Förderfach schwerkraftbedingt entleert wird. Die Tablettenportionen können dann beispielsweise in die Verpackungsvorrichtung mittels Schwerkraft fallen.

Durch das Vorsehen einer Fördervorrichtung mit mehreren Förderfächern wird ein Puffer geschaffen, so dass beispielsweise beim Austausch der Tablettenbehälter der Übergabevorgang an die Verpackungsvorrichtung und der Verpackungsvorgang über einen gewissen Zeitraum weiter erfolgen kann. Auch bieten mehrere Förderfächer die Möglichkeit, einen Puffer von Tablettenportionen aufzubauen, wenn beispielsweise der Verpackungsvorgang der Verpackungsvorrichtung unterbrochen ist. Somit können während der Unterbrechung des Verpackungsvorgangs der Verpackungsvorrichtung bereits Portionierungen von Tabletten vorgenommen werden. Die Ausgestaltung der Fördervorrichtung mit einer Ausgabeeinrichtung, über die die Tablettenportionen mittels Schwerkraft an die Verpackungsvorrichtung übergeben werden, ermöglicht einen einfachen Aufbau der Fördervorrichtung sowie der Verpackungsvorrichtung, wobei die Verpackungsvorrichtung lediglich die Aufnahme von Tablettenportionen von oben ermöglichen muss.

Vorzugsweise ist die Ausgabeeinrichtung als Ausgabekopf ausgebildet, der an einem ersten Ende der Fördervorrichtung angeordnet ist.

Durch die Fördervorrichtung ist bei der erfindungsgemäßen Tablettenportioniervorrichtung darüber hinaus die Einheit, die die Portionierung der Tabletten vornimmt und die aus den Tablettenbehältern und der Sammelvorrichtung mit Ausgabevorrichtung besteht, von der Verpackungsvorrichtung örtlich getrennt, so dass die Verpackungsvorrichtung beispielsweise neben der Portioniereinheit angeordnet werden kann. Die Verpackungsvorrichtung ist somit hinsichtlich ihrer Größe relativ frei gestaltbar und ist nicht durch Größenvorgaben durch den die Portionierung vornehmenden Teil der Tablettenportioniervorrichtung begrenzt. Dadurch ist die erfindungsgemäße Tablettenportioniervorrichtung flexibel gestaltbar und es können unterschiedliche Verpackungsvorrichtungen verwendet werden. Durch die Fördervorrichtung mit Ausgabeeinrichtung, über die die Tablettenportionen mittels Schwerkraft an die Verpackungsvorrichtung übergeben werden, ist ferner eine Übergabe der Tablettenportionen auf schnelle Art und Weise möglich.

Die Tablettenbehälter einer erfindungsgemäßen Tablettenportioniervorrichtung geben üblicherweise Tabletten einzeln an die Sammelvorrichtung ab. Selbstverständlich besteht auch die Möglichkeit, dass ein Tablettenbehälter mehrere Tabletten gleichzeitig abgibt.

Erfindungsgemäß ist vorgesehen, dass die Fördervorrichtung auf einer Schienenvorrichtung gelagert ist und über die Schienenvorrichtung in eine horizontale Richtung quer zu der Förderrichtung der Fördervorrichtung von einer Transportposition, in der die Fördervorrichtung Tablettenportionen von der Ausgabevorrichtung zu der Verpackungsvorrichtung transportiert, in eine Parkposition bewegbar ist. Mit anderen Worten: Die Fördervorrichtung kann verschoben werden, so dass sie sich nicht mehr unterhalb der Ausgabevorrichtung der Sammelvorrichtung befindet. In der Parkposition der Fördervorrichtung ist somit die Ausgabevorrichtung der Sammelvorrichtung besser oder frei zugänglich, so dass beispielsweise auf einfache Art und Weise eine Wartung der Ausgabevorrichtung vorgenommen werden kann. Auch wird durch das Bewegen der Fördervorrichtung in die Parkposition der Bereich unterhalb der Sammelvorrichtung mit Ausgabevorrichtung freigegeben, so dass eine weitere Vorrichtung, wie beispielsweise eine Abpackvorrichtung für Tablettenportionen, unterhalb der Ausgabevorrichtung angeordnet werden kann.

Vorzugsweise ist vorgesehen, dass die Ausgabevorrichtung einen steuerbaren Auslass aufweist, über den die Tablettenportionen gesteuert ausgegeben werden können. Dadurch lassen sich in der Sammelvorrichtung gesammelte Tablettenportionen in vorteilhafter Weise und zu einem vorgegebenen Zeitpunkt ausgeben und beispielsweise an die Fördervorrichtung übergeben.

Der steuerbare Auslass kann beispielsweise eine verschwenkbare Verschlussplatte aufweisen. Mittels einer verschwenkbaren Verschlussplatte lässt sich der steuerbare Auslass auf konstruktiv einfache Art und Weise ausbilden. Dabei kann vorgesehen sein, dass die schwenkbare Verschlussplatte in einer horizontalen Ebene verschwenkbar ist. Auf diese Weise lässt sich der steuerbare Auslass auf platzsparende Art und Weise gestalten, wobei insbesondere die Bauhöhe der Ausgabevorrichtung gering gehalten werden kann.

Die Sammelvorrichtung kann eine Trichtervorrichtung aufweisen, die mit der Ausgabevorrichtung verbunden ist. Somit kann die erfindungsgemäße Tablettenportioniervorrichtung auf konstruktiv einfache Art und Weise ausgestaltet werden, indem die Tablettenbehälter sich oberhalb der Sammelvorrichtung befinden und die Tabletten auf einfache Art und Weise ausgeben und mittels der Trichtervorrichtung der Sammelvorrichtung aufgefangen und zu der Ausgabevorrichtung geleitet werden.

In einer besonders bevorzugten Ausführungsform der Erfindung ist eine bewegbare Abpackvorrichtung vorgesehen, die in der Parkposition der Fördervorrichtung unterhalb der Ausgabevorrichtung zum Empfang von Tablettenportionen von der Ausgabevorrichtung anordnenbar ist, wobei die Abpackvorrichtung aus einer Benutzungsposition unterhalb der Ausgabevorrichtung zur Freigabe eines Bereichs unterhalb der Sammelvorrichtung für die Fördervorrichtung in eine Verstauposition bewegbar ist. Mit anderen Worten: Die erfindungsgemäße Tablettenportioniervorrichtung kann neben der Verpackungsvorrichtung eine Abpackvorrichtung vorsehen, die in der Parkposition der Fördervorrichtung unterhalb der Sammelvorrichtung angeordnet wird. Somit ist die erfindungsgemäße Tablettenportioniervorrichtung besonders flexibel einsetzbar, da unterschiedliche Vorrichtungen zum Ver- oder Abpacken von Tablettenportionen vorgesehen werden können. Beispielsweise kann die Abpackvorrichtung die Tablettenportionen in einzelne Verpackungsbeutel abpacken. Die Verpackungsvorrichtung kann beispielsweise die Tablettenportionen in Verpackungen mit mehreren Fächern verpacken.

Vorzugsweise ist vorgesehen, dass die Fördervorrichtung aus einem umlaufenden Stollenband mit abstehenden, voneinander mit einem Abstand D beabstandeten Stollen besteht, wobei jeweils zwei benachbarte Stollen jeweils eines der Förderfächer an zumindest zwei Seiten begrenzen. Mit anderen Worten: Ein Förderfach erstreckt sich in Förderrichtung über eine Länge mit dem Betrag D. Über ein umlaufendes Stollenband lässt sich die Fördervorrichtung der erfindungsgemäßen Tablettenportioniervorrichtung auf konstruktiv einfache Art und Weise bilden, wobei die Stollen in vorteilhafter Weise die Förderfächer bilden. Darüber hinaus ist eine derart ausgebildete Fördervorrichtung sehr platzsparend ausgebildet. Das umlaufende Stollenband ermöglicht ferner, dass die Tablettenportionen in vorteilhafter Weise in den Förderfächern transportiert werden können, wobei in einem Umlaufbereich des Stollenbandes die Tablettenportionen automatisch schwerkraftbedingt aus den Förderfächern herausfallen. Darüber hinaus ermöglicht das umlaufende Stollenband, dass bei einer Fehlfunktion der Tablettenportioniervorrichtung, bei der beispielsweise keine Tabletten in ein Förderfach ausgegeben wurden, die Fördervorrichtung auf einfache Art und Weise auch entgegen der Förderrichtung betrieben werden kann, um ein Füllen eines Förderfachs nachzuholen. Dadurch ist die Fördervorrichtung der erfindungsgemäßen Tablettenportioniervorrichtung in vorteilhafter Weise und flexibel einsetzbar.

In einer bevorzugten Ausführungsform der Erfindung ist vorgesehen, dass die Fördervorrichtung Seitenwände aufweist, die seitlich neben dem Stollenband angeordnet sind und die Förderfächer zumindest in einem Transportbereich des Stollenbandes an zwei weiteren Seiten begrenzen. Mit anderen Worten: Die Förderfächer sind durch die mit dem Stollenband mitlaufenden Stollen sowie den Seitenwänden der Fördervorrichtung, die vorzugsweise stationär angeordnet sind, begrenzt. Die Seitenwände der Fördervorrichtung können dabei insbesondere über den durch das Stollenband gebildeten Förderfachboden in orthogonaler Richtung zu dem Förderfachboden mit einer Höhe H überstehen, wobei die Höhe H vorzugsweise zumindest der Höhe h der Stollen entspricht.

Die Seitenwände der Fördereinrichtung können auch oberhalb des Stollenbandes miteinander verbunden sein, so dass eine Art Deckel gebildet ist. Hierdurch wird vermieden, dass Verschmutzungen in die Förderfächer und somit zu den Tablettenportionen gelangen.

In einer Ausführungsform der Erfindung kann vorgesehen sein, dass die Höhe h der Stollen kleiner als der Abstand D der Stollen ist. Mit anderen Worten: Die Stollen haben eine relativ geringe Höhe h, so dass ein kleiner Bauraum für die Fördereinrichtung gewährleistet sein kann. Insbesondere bei dem Vorsehen eines Deckels, der die Seitenwände oberhalb eines Stollenbandes miteinander verbindet, wird die Gefahr, dass bei einem Anfahren oder Abstoppen der Fördereinrichtung Tabletten von einem Förderfach in ein anderes überspringen, gering gehalten. Die Höhe h der Stollen kann somit relativ klein gewählt werden.

Vorzugsweise ist die vorzugsweise als Ausgabekopf ausgebildete Ausgabeeinrichtung an einem ersten Umlenkbereich des Stollenbandes angeordnet. Als erster Umlenkbereich wird zumindest der Bereich des Stollenbandes verstanden, der durch eine Umlenkung in einem ersten Endabschnitt gekrümmt ist. Die Ausgabeeinrichtung kann sich aber grundsätzlich über einen weiteren Bereich des Stollenbandes erstrecken.

Vorzugsweise liegt die vorzugsweise als Ausgabekopf ausgebildete Ausgabeeinrichtung zumindest in dem ersten Umlenkbereich an den Seitenwänden an und verbindet diese, wobei die Ausgabeeinrichtung ein in dem Umlenkbereich befindliches Förderfach abdeckt. Dadurch wird erreicht, dass die Ausgabeeinrichtung ein schwerkraftbedingtes Herausfallen der Tablettenportionen aus dem sich im Umlenkbereich befindlichen Förderfach zunächst verhindert, so dass die Tablettenportionen nicht bereits im Umlenkbereich aus dem entsprechenden Förderfach herausfallen. Der Zeitpunkt und Ort des Herausfallens der Tablettenportion kann somit klar definiert werden, so dass dieser erst nach der Ausgabeeinrichtung oder in einem Aussparungsbereich der Ausgabeeinrichtung erfolgt.

Vorzugsweise ist vorgesehen, dass sich die vorzugsweise als Ausgabekopf ausgebildete Ausgabeeinrichtung ausgehend von dem ersten Umlenkbereich unterhalb eines Untertrums des Stollenbandes mit einer Länge L erstreckt und einen Übergabebereich bildet, wobei die Länge L mindestens dem Abstand D zwischen zwei benachbarten Stollen entspricht, wobei die Ausgabeeinrichtung im Übergabebereich eine Übergabeöffnung aufweist. Somit wird durch die Ausgabeeinrichtung die Übergabeposition der Tablettenportionen und somit der Ort, an dem die Tablettenportionen schwerkraftbedingt aus der Fördervorrichtung herausfallen, vorgegeben, wobei sich diese Position im Bereich des Untertrums des Stollenbandes befindest. Dadurch kann sichergestellt werden, dass die Übergabe der Tablettenportionen an die Verpackungsvorrichtung zuverlässig erfolgt.

Durch die vorzugsweise als Ausgabekopf ausgebildete Ausgabeeinrichtung kann, wie zuvor beschrieben ist, erreicht werden, dass das Förderfach, das sich im Umlenkbereich des Stollenbandes befindet, abgedeckt ist, so dass eine darin befindliche Tablettenportion noch nicht aus dem Förderfach herausgefallen ist. Dadurch kann erreicht werden, dass beispielsweise bei einer Fehlfunktion, bei der es einer Kalibrierung des Stollenbandes bedarf, dieses um beispielsweise ein Förderfach rückwärts bewegt werden kann, ohne dass Unwissenheit darüber besteht, ob das im Umlenkbereich befindliche Fach entleert wurde oder nicht. Dadurch kann selbst bei einer Fehlfunktion der Tablettenportioniervorrichtung, bei der es einer Neukalibrierung der Fördervorrichtung bedarf, eine Fortführung des Verpackungsvorgangs erfolgen, ohne dass es einer Kontrolle bedarf. Dabei wird das Stollenband durch ein Zurückfahren des Stollenbandes um beispielsweise ein Förderfach kalibriert.

Für eine Kalibrierung des Stollenbandes kann vorgesehen sein, dass in jedem Stollen des Stollenbandes ein RFID-Chip angeordnet ist. Dieser kann über einen stationär angeordneten Sensor, der beispielsweise an einer der Seitenwände angeordnet ist, ausgelesen werden. Bei einem Rückfahren des Stollenbandes um beispielsweise bis zu ein Förderfach ist sichergestellt, dass ein Stollen an dem Sensor vorbeigeführt wird, so dass die Position des Stollenbandes durch den erkannten RFID-Chip erkannt werden kann. Grundsätzlich ist auch möglich, dass nicht in jedem Stollen ein RFID-Chip angeordnet ist, sondern nur in einigen. In diesem Fall ist jedoch für eine Kalibrierung notwendig, dass das Stollenband so lange verfahren wird, bis der Sensor einen RFID-Chip in einem Stollen erkennt, so dass die zuvor beschriebene vorteilhafte Funktion, dass keine Fehlbefüllung erfolgt, nicht notwendigerweise gegeben ist. Grundsätzlich würde es auch ausreichend sein, wenn lediglich in einem Stollen ein RFID-Chip angeordnet ist, wobei in diesem Fall das Stollenband je nach Position des Stollenbandes bei Fehlfunktion über teilweise einen langen Weg zur Kalibrierung verfahren werden muss.

Grundsätzlich sind auch andere Möglichkeiten zur Kalibrierung des Stollenbandes denkbar. Anstelle eines RFID-Chips können beispielsweise auch optische Markierungen an den Stollen vorgesehen sein, die über einen optischen Sensor erkannt werden. Für die Kalibrierung des Stollenbandes ist es grundsätzlich nur notwendig, eine eindeutige Position eines festgelegten Stollens festzustellen.

Vorzugsweise ist vorgesehen, dass die Übergabeöffnung der vorzugsweise als Ausgabekopf ausgebildeten Ausgabeeinrichtung an die Größe einer Öffnung einer Verpackung oder an die Größe einer Einfüllöffnung der Verpackungsvorrichtung angepasst ist. Auf diese Weise kann sichergestellt werden, dass eine in einem Förderfach aufgenommene Tablettenportion in zuverlässiger Weise in die Verpackung übergeben wird oder in die Einfüllöffnung der Verpackungsvorrichtung fällt.

Vorzugsweise ist vorgesehen, dass die Verpackungsvorrichtung mehrere Einfüllfächer mit jeweils einer Einfüllöffnung aufweist, die eine an eine Verpackung mit mehreren Fächern (z. B. eine Blisterkarte) angepasster Anordnung aufweisen, wobei die Böden der Einfüllfächer durch eine oder mehrere Schieber gebildet sind, über den oder die die Einfüllfächer an der Unterseite öffenbar sind, und wobei die Tablettenportionen in jeweils eines der Einfüllfächer einfüllbar sind. Durch mehrere Einfüllfächer lassen sich Verpackungen mit mehreren Fächern in vorteilhafter Weise befüllen. Beispielsweise können zunächst die Einfüllfächer der Verpackungsvorrichtung befüllt werden, bevor anschließend durch das Öffnen der Böden durch den oder die Schieber die in die Einfüllfächer eingefüllten Tablettenportionen an die Verpackung übergeben werden. Durch das Vorsehen der Einfüllfächer der Verpackungsvorrichtung kann somit ein Puffer ermöglicht werden, so dass die Einfüllfächer befüllt werden können, ohne dass beispielsweise eine Verpackung bereits in ihrer Befüllposition ist. So kann beispielsweise eine zuvor befüllte Verpackung ausgegeben oder entnommen werden, ohne dass ein Einfüllvorgang in die Verpackungsvorrichtung unterbrochen werden muss. Dadurch ist eine vorteilhafte Befüllung von Verpackungen möglich.

Die Erfindung kann vorsehen, dass die Einfüllfächer an einem horizontal in zwei Richtungen bewegbaren Tisch angeordnet sind. Somit sind die Einfüllfächer in vorteilhafter Weise mittels des bewegbaren Tisches bewegbar und können unterhalb der Übergabeöffnung der vorzugsweise als Ausgabekopf ausgebildeten Ausgabeeinrichtung positioniert werden. Auf diese Weise sind die Einfüllfächer in vorteilhafter Weise mit Tablettenportionen befüllbar, indem ein Einfüllfach unter der Übergabeöffnung der Ausgabeeinrichtung positioniert wird und die Fördervorrichtung anschließend in Förderrichtung verfahren wird, so dass ein mit einer Tablettenportion befülltes Förderfach sich im Bereich der Übergabeöffnung befindet. Die sich in dem Förderfach befindlichen Tablettenportionen fallen schwerkraftbedingt aus dem Förderfach in das Einfüllfach der Verpackungsvorrichtung. Anschließend kann mittels des Tisches ein anderes Einfüllfach unter der Übergabeöffnung positioniert werden und die Fördervorrichtung wird erneut betätigt. Auf diese Weise erfolgt eine Übergabe von Tablettenportionen von der Fördervorrichtung an die Verpackungsvorrichtung in besonders vorteilhafter Weise.

Die Erfindung kann in vorteilhafter Weise vorsehen, dass die Verpackungsvorrichtung einen Verpackungshalter zum Halten einer Verpackung in einer Befüllposition aufweist, wobei der Tisch zur Befüllung der Verpackung oberhalb des Verpackungshalters positionierbar ist. Über den Verpackungshalter lässt sich eine Verpackung mit mehreren Fächern in besonders vorteilhafter Weise unterhalb des Tisches positionieren. Wenn alle oder ein Teil der Einfüllfächer des Tisches mit Tablettenportionen befüllt sind, kann einer der Schieber oder der Schieber bewegt werden, so dass die Tablettenportionen aus den Einfüllfächern in die Fächer der Verpackung fallen.

Dabei kann vorgesehen sein, dass der Verpackungshalter die Verpackung nach der Befüllung aus der Befüllposition in eine Entnahmeposition transportiert. Über den Verpackungshalter lässt sich somit die Verpackung in vorteilhafter Weise zum Entnehmen positionieren. Gleichzeitig können während des Entnahmevorgangs der Verpackung die Einfüllfächer in dem Tisch bei geschlossener Position des oder der Schieber weiter befüllt werden.

Die Verpackungsvorrichtung kann eine Entnahmevorrichtung aufweisen, an der die Verpackung versiegelbar ist, wobei sich die Entnahmeposition der Verpackung in der Entnahmevorrichtung befindet.

Der Verpackungshalter kann beispielsweise als Lift ausgebildet sein, der die Verpackung in die Entnahmeposition anhebt, so dass diese in einer für den Benutzer angenehmen Höhe angeordnet ist.

Der Verpackungshalter kann einen Boden aufweisen, der sich unterhalb der Verpackung erstreckt. Dies hat den Vorteil, dass, falls eine Verpackung nicht korrekt oder nicht in den Verpackungshalter eingesetzt wird und der Befüllvorgang weiter durchgeführt wird, die aus den Einfüllfächern herausfallenden Tablettenportionen von dem Verpackungshalter aufgefangen werden können und somit nicht verschüttet werden.

Die Erfindung kann vorsehen, dass der Tisch ein Ausschussfach aufweist. In dem Ausschussfach können beispielsweise falsch portionierte Tablettenportionen eingefüllt werden. Das Ausschussfach ist mittels des Tischs unterhalb der Übergabeöffnung positionierbar. Sollte während des Betriebs der Tablettenportioniervorrichtung festgestellt werden, dass in einem Förderfach der Fördervorrichtung eine falsche Tablettenportion eingegeben wurde, kann somit ohne eine langwierige Unterbrechung des Betriebs die falsche Tablettenportion in das Ausschussfach umgefüllt werden.

Grundsätzlich kann bei der erfindungsgemäßen Tablettenportioniervorrichtung auch vorgesehen sein, dass der Tisch eine Verpackung aufnimmt, so dass keine Einfüllfächer und Schieber vorgesehen sind. Die Tablettenportionen werden dann in diesem Fall direkt von der Fördervorrichtung in die Fächer der Verpackung eingefüllt. Der bewegbare Tisch funktioniert in diesem Fall als Verpackungshalter.

Vorzugsweise ist vorgesehen, dass der Tisch über zwei seitlich gegenüberliegend an dem Tisch angeordnete L-förmige Träger an einer Antriebsvorrichtung befestigt ist, wobei der oder die Schieber zum Öffnen der Böden der Einfüllfächer zwischen die L-förmigen Träger bewegbar ist bzw. sind. Eine derartige Konstruktion hat sich als besonders vorteilhaft herausgestellt, da eine platzsparende Konstruktion ermöglicht ist. Durch das Vorsehen der L-förmigen Träger ist eine Aussparung gebildet, durch die die Schieber zum Öffnen der Böden der Einfüllfächer bewegbar sind, so dass die Schieber in vorteilhafter Weise in Richtung der Träger und somit in Richtung der Befestigung des Tisches bewegt werden können. Somit ist der Tisch von bis zu fünf Seiten in vorteilhafter Weise zugänglich, so dass der Verpackungshalter in vorteilhafter Weise unter den Tisch geführt werden kann. Dadurch ist eine platzsparende Konstruktion der Tablettenportioniervorrichtung möglich.

In einer besonders bevorzugten Ausführungsform der Erfindung ist vorgesehen, dass oberhalb der Fördervorrichtung eine Kamera angeordnet ist, die auf die Fördervorrichtung gerichtet ist. Über die Kamera lassen sich Bilddaten von den Förderfächern und ihrem Inhalt erstellen, über die mittels Bildauswertung ein Inhalt der Förderfächer bestimmbar ist. Dadurch lässt sich kontrollieren, welche Tabletten bzw. Tablettenportionen sich in den Förderfächern befinden. Bei einer Fördervorrichtung mit einer Abdeckung weist die Abdeckung eine Aussparung auf, durch die die Kamera auf die Förderfächer blicken kann.

Bei der erfindungsgemäßen Tablettenportioniervorrichtung kann in vorteilhafter Weise vorgesehen sein, dass in der Transportposition der Fördervorrichtung die Ausgabevorrichtung in Förderrichtung mit einem Abstand A, der mindestens den Abstand D beträgt, von einem zweiten Umlenkbereich des Stollenbands beabstandet ist. Der zweite Umlenkbereich ist dabei zumindest der Bereich des Stollenbandes, der durch eine Umlenkung in einem zweiten Endabschnitt der Fördervorrichtung, die unterhalb der Ausgabevorrichtung angeordnet ist, gekrümmt ist. Durch den Abstand A, der mindestens den Abstand D beträgt, ist in Transportrichtung vor der Ausgabevorrichtung ein Pufferfach gebildet, so dass beispielsweise bei einer Kalibrierung das Stollenband entgegen der Förderrichtung bewegt werden kann. Es wird daher verhindert, dass ein zuvor unterhalb der Ausgabevorrichtung befindliches Förderfach, das mit einer Tablettenportion befüllt wurde, durch ein Verfahren des Stollenbands um ein Fach entgegen der Förderrichtung in den Umlenkbereich gelangt und dort die sich in dem Förderfach befindliche Tablettenportion herausfallen kann. Grundsätzlich ist es auch möglich, dass die Ausgabevorrichtung in Förderrichtung unmittelbar an den Umlenkbereich angrenzt, wobei dann vorzugsweise der Umlenkbereich abgedeckt ist, um ein Pufferfach zu bilden.

Auf diese Weise ist die Kalibrierung des Stollenbandes in vorteilhafter Weise möglich.

Die Erfindung betrifft ferner eine Tablettenportioniervorrichtung mit mehreren Tablettenbehältern mit einer unterhalb der Tablettenbehälter angeordneten Sammelvorrichtung mit Ausgabevorrichtung und mit einer Abpackvorrichtung zum Abpacken von Tablettenportionen. Die Sammelvorrichtung empfängt Tabletten aus den Tablettenbehältern und gibt diese über die Ausgabevorrichtung als Tablettenportion aus. Die Abpackvorrichtung ist in einer Benutzungsposition unterhalb der Ausgabevorrichtung angeordnet und empfängt die Tablettenportionen von der Ausgabevorrichtung. Die Abpackvorrichtung ist aus der Benutzungsposition zur Freigabe des Bereichs unterhalb der Sammelvorrichtung in eine Verstauposition bewegbar. Die Tablettenportioniervorrichtung weist ferner eine Fördervorrichtung mit mehreren Förderfächern auf, wobei in der Verstauvorrichtung der Abpackvorrichtung über die Fördervorrichtung die Ausgabevorrichtung mit einer Verpackungsvorrichtung verbindbar ist, wobei die Ausgabevorrichtung jeweils eine Tablettenportion in eines der Förderfächer ausgibt und die Fördervorrichtung die Tablettenportionen zu der Verpackungsvorrichtung transportiert. Die Fördervorrichtung ist auf einer Schienenvorrichtung gelagert und über die Schienenvorrichtung in einer horizontalen Richtung quer zu der Förderrichtung der Fördervorrichtung von einer Transportposition, in der die Fördervorrichtung Tablettenportionen von der Ausgabevorrichtung zu der Verpackungsvorrichtung transportiert, in eine Parkposition bewegbar.

Die erfindungsgemäße Tablettenportioniervorrichtung mit Abpackvorrichtung und Verpackungsvorrichtung bietet die Möglichkeit, Tablettenportionen in einer Abpackvorrichtung, in der die Tablettenportionen beispielsweise portionsweise in Beutel abgepackt werden, oder in einer Verpackungsvorrichtung, in der die Tablettenportionen beispielsweise in mehreren Fächern einer Verpackung (z. B. einer Blisterkarte) verpackt werden, entsprechend zu behandeln.

Die erfindungsgemäße Tablettenportioniervorrichtung mit Abpackvorrichtung und Verpackungsvorrichtung bietet somit einen besonders flexiblen Einsatz. Durch das Verschieben der Fördervorrichtung auf einer Schienenvorrichtung in eine Richtung horizontal quer zu der Förderrichtung der Fördervorrichtung lässt sich auf einfache Art und Weise unterhalb der Ausgabevorrichtung Platz schaffen, so dass die Abpackvorrichtung in ihre Benutzungsposition unterhalb der Ausgabevorrichtung gebracht werden kann. Sollen nun Tablettenportionen über die Verpackungsvorrichtung behandelt werden, kann die Abpackvorrichtung in ihre Verstauposition bewegt werden, so dass unterhalb der Ausgabevorrichtung ausreichend Platz ist, um die Fördervorrichtung aus ihrer Parkposition in die Transportposition zu bewegen. Die Tabletten werden in dieser Einstellung der erfindungsgemäßen Tablettenportioniervorrichtung nun aus der Ausgabevorrichtung auf die Fördervorrichtung ausgegeben und von dieser zur Verpackungsvorrichtung transportiert.

Bei der erfindungsgemäßen Tablettenportioniervorrichtung mit Abpackvorrichtung und Verpackungsvorrichtung weist die Fördervorrichtung vorzugsweise eine Ausgabeeinrichtung auf, über die die Tablettenportionen portionsweise an die Verpackungsvorrichtung übergeben werden.

Mit anderen Worten: Die Tablettenportionen können von der Sammelvorrichtung und der Ausgabevorrichtung portioniert in die Förderfächer abgegeben werden und mittels der Ausgabeeinrichtung wird dann jede Tablettenportion als Ganzes an die Verpackungsvorrichtung übergeben.

Vorzugsweise wird jede Tablettenportion über die Ausgabeeinrichtung zumindest teilweise mittels Schwerkraft an die Verpackungsvorrichtung übergeben. Beispielsweise kann vorgesehen sein, dass die Ausgabeeinrichtung ein Förderfach entleert oder das Förderfach schwerkraftbedingt entleert wird. Die Tablettenportionen können dann beispielsweise in die Verpackungsvorrichtung mittels Schwerkraft fallen.

Die Ausgestaltung der Fördervorrichtung mit einer Ausgabeeinrichtung, über die die Tablettenportionen mittels Schwerkraft an die Verpackungsvorrichtung übergeben werden, ermöglicht einen einfachen Aufbau der Fördervorrichtung sowie der Verpackungsvorrichtung, wobei die Verpackungsvorrichtung lediglich die Aufnahme von Tablettenportionen von oben ermöglichen muss. Durch die Fördervorrichtung mit Ausgabeeinrichtung, über die die Tablettenportionen mittels Schwerkraft an die Verpackungsvorrichtung übergeben werden, ist ferner eine Übergabe der Tablettenportionen auf schnelle Art und Weise möglich.

Vorzugsweise ist die Ausgabeeinrichtung als Ausgabekopf ausgebildet, der an einem ersten Ende der Fördervorrichtung angeordnet ist.

Bei der erfindungsgemäßen Tablettenportioniervorrichtung mit Abpackvorrichtung und Verpackungsvorrichtung ist vorzugsweise vorgesehen, dass die Ausgabevorrichtung einen steuerbaren Auslass aufweist, über den die Tablettenportionen gesteuert ausgegeben werden können. Dadurch lassen sich in der Sammelvorrichtung gesammelte Tablettenportionen in vorteilhafter Weise und zu einem vorgegebenen Zeitpunkt ausgeben und beispielsweise an die Fördervorrichtung übergeben.

Bei der erfindungsgemäßen Tablettenportioniervorrichtung mit Abpackvorrichtung und Verpackungsvorrichtung kann der steuerbare Auslass beispielsweise eine verschwenkbare Verschlussplatte aufweisen. Mittels einer verschwenkbaren Verschlussplatte lässt sich der steuerbare Auslass auf konstruktiv einfache Art und Weise ausbilden. Dabei kann vorgesehen sein, dass die schwenkbare Verschlussplatte in einer horizontalen Ebene verschwenkbar ist. Auf diese Weise lässt sich der steuerbare Auslass auf platzsparende Art und Weise gestalten, wobei insbesondere die Bauhöhe der Ausgabevorrichtung gering gehalten werden kann.

Bei der erfindungsgemäßen Tablettenportioniervorrichtung mit Abpackvorrichtung und Verpackungsvorrichtung kann die Sammelvorrichtung eine Trichtervorrichtung aufweisen, die mit der Ausgabevorrichtung verbunden ist. Somit kann die erfindungsgemäße Tablettenportioniervorrichtung auf konstruktiv einfache Art und Weise ausgestaltet werden, indem die Tablettenbehälter sich oberhalb der Sammelvorrichtung befinden und die Tabletten auf einfache Art und Weise ausgeben und mittels der Trichtervorrichtung der Sammelvorrichtung aufgefangen und zu der Ausgabevorrichtung geleitet werden.

Bei der erfindungsgemäßen Tablettenportioniervorrichtung mit Abpackvorrichtung und Verpackungsvorrichtung ist vorzugsweise vorgesehen, dass die Fördervorrichtung aus einem umlaufenden Stollenband mit abstehenden, voneinander mit einem Abstand D beabstandeten Stollen besteht, wobei jeweils zwei benachbarte Stollen jeweils eines der Förderfächer an zumindest zwei Seiten begrenzen. Mit anderen Worten: Ein Förderfach erstreckt sich in Förderrichtung über eine Länge mit dem Betrag D. Über ein umlaufendes Stollenband lässt sich die Fördervorrichtung der erfindungsgemäßen Tablettenportioniervorrichtung auf konstruktiv einfache Art und Weise bilden, wobei die Stollen in vorteilhafter Weise die Förderfächer bilden. Darüber hinaus ist eine derart ausgebildete Fördervorrichtung sehr platzsparend ausgebildet. Das umlaufende Stollenband ermöglicht ferner, dass die Tablettenportionen in vorteilhafter Weise in den Förderfächern transportiert werden können, wobei in einem Umlaufbereich des Stollenbandes die Tablettenportionen automatisch schwerkraftbedingt aus den Förderfächern herausfallen. Darüber hinaus ermöglicht das umlaufende Stollenband, dass bei einer Fehlfunktion der Tablettenportioniervorrichtung, bei der beispielsweise keine Tabletten in ein Förderfach ausgegeben wurden, die Fördervorrichtung auf einfache Art und Weise auch entgegen der Förderrichtung betrieben werden kann, um ein Füllen eines Förderfachs nachzuholen. Dadurch ist die Fördervorrichtung der erfindungsgemäßen Tablettenportioniervorrichtung in vorteilhafter Weise und flexibel einsetzbar.

In einer bevorzugten Ausführungsform der erfindungsgemäßen Tablettenportioniervorrichtung mit Abpackvorrichtung und Verpackungsvorrichtung ist vorgesehen, dass die Fördervorrichtung Seitenwände aufweist, die seitlich neben dem Stollenband angeordnet sind und die Förderfächer zumindest in einem Transportbereich des Stollenbandes an zwei weiteren Seiten begrenzen. Mit anderen Worten: Die Förderfächer sind durch die mit dem Stollenband mitlaufenden Stollen sowie den Seitenwänden der Fördervorrichtung, die vorzugsweise stationär angeordnet sind, begrenzt. Die Seitenwände der Fördervorrichtung können dabei insbesondere über den durch das Stollenband gebildeten Förderfachboden in orthogonaler Richtung zu dem Förderfachboden mit einer Höhe H überstehen, wobei die Höhe H vorzugsweise zumindest der Höhe h der Stollen entspricht.

Bei der erfindungsgemäßen Tablettenportioniervorrichtung mit Abpackvorrichtung und Verpackungsvorrichtung können die Seitenwände der Fördereinrichtung auch oberhalb des Stollenbandes miteinander verbunden sein, so dass eine Art Deckel gebildet ist. Hierdurch wird vermieden, dass Verschmutzungen in die Förderfächer und somit zu den Tablettenportionen gelangen.

In einer Ausführungsform der Erfindung kann vorgesehen sein, dass die Höhe h der Stollen kleiner als der Abstand D der Stollen ist. Mit anderen Worten: Die Stollen haben eine relativ geringe Höhe, so dass ein kleiner Bauraum für die Fördereinrichtung gewährleistet sein kann. Insbesondere bei dem Vorsehen eines Deckels, der die Seitenwände oberhalb eines Stollenbandes miteinander verbindet, wird die Gefahr, dass bei einem Anfahren oder Abstoppen der Fördereinrichtung von einem Förderfach in ein anderes überspringen, gering gehalten. Die Höhe h der Stollen kann somit relativ klein gehalten werden.

Bei der erfindungsgemäßen Tablettenportioniervorrichtung mit Abpackvorrichtung und Verpackungsvorrichtung ist die vorzugsweise als Ausgabekopf ausgebildete Ausgabeeinrichtung vorzugsweise an einem ersten Umlenkbereich des Stollenbandes angeordnet. Als erster Umlenkbereich wird zumindest der Bereich des Stollenbandes verstanden, der durch eine Umlenkung in einem ersten Endabschnitt gekrümmt ist. Die Ausgabeeinrichtung kann sich aber grundsätzlich über einen weiteren Bereich des Stollenbandes erstrecken.

Bei der erfindungsgemäßen Tablettenportioniervorrichtung mit Abpackvorrichtung und Verpackungsvorrichtung liegt die vorzugsweise als Ausgabekopf ausgebildete Ausgabeeinrichtung vorzugsweise zumindest in dem ersten Umlenkbereich an den Seitenwänden an und verbindet diese, wobei die Ausgabeeinrichtung ein in dem Umlenkbereich befindliches Förderfach abdeckt. Dadurch wird erreicht, dass die Ausgabeeinrichtung ein schwerkraftbedingtes Herausfallen der Tablettenportionen aus dem sich im Umlenkbereich befindlichen Förderfach zunächst verhindert, so dass die Tablettenportionen nicht bereits im Umlenkbereich aus dem entsprechenden Förderfach herausfallen. Der Zeitpunkt und Ort des Herausfallens der Tablettenportion kann somit klar definiert werden, so dass dieser erst nach der Ausgabeeinrichtung oder in einem Aussparungsbereich der Ausgabeeinrichtung erfolgt.

Bei der erfindungsgemäßen Tablettenportioniervorrichtung mit Abpackvorrichtung und Verpackungsvorrichtung ist vorzugsweise vorgesehen, dass sich die vorzugsweise als Ausgabekopf ausgebildete Ausgabeeinrichtung ausgehend von dem ersten Umlenkbereich unterhalb eines Untertrums des Stollenbandes mit einer Länge L erstreckt und einen Übergabebereich bildet, wobei die Länge L mindestens dem Abstand D zwischen zwei benachbarten Stollen entspricht, wobei die Ausgabeeinrichtung im Übergabebereich eine Übergabeöffnung aufweist. Somit wird durch die Ausgabeeinrichtung die Übergabeposition der Tablettenportionen und somit der Ort, an dem die Tablettenportionen schwerkraftbedingt aus der Fördervorrichtung herausfallen, vorgegeben, wobei sich diese Position im Bereich des Untertrums des Stollenbandes befindest. Dadurch kann sichergestellt werden, dass die Übergabe der Tablettenportionen an die Verpackungsvorrichtung zuverlässig erfolgt. Durch die vorzugsweise als Ausgabekopf ausgebildete Ausgabeeinrichtung kann, wie zuvor beschrieben ist, erreicht werden, dass das Förderfach, das sich im Umlenkbereich des Stollenbandes befindet, abgedeckt ist, so dass eine darin befindliche Tablettenportion noch nicht aus dem Förderfach herausgefallen ist. Dadurch kann erreicht werden, dass beispielsweise bei einer Fehlfunktion, bei der es einer Kalibrierung des Stollenbandes bedarf, dieses um beispielsweise ein Förderfach rückwärts bewegt werden kann, ohne dass Unwissenheit darüber besteht, ob das im Umlenkbereich befindliche Fach entleert wurde oder nicht. Dadurch kann selbst bei einer Fehlfunktion der Tablettenportioniervorrichtung, bei der es einer Neukalibrierung der Fördervorrichtung bedarf, eine Fortführung des Verpackungsvorgangs erfolgen, ohne dass es einer Kontrolle bedarf. Dabei wird das Stollenband durch ein Zurückfahren des Stollenbandes um beispielsweise ein Förderfach kalibriert.

Bei der erfindungsgemäßen Tablettenportioniervorrichtung mit Abpackvorrichtung und Verpackungsvorrichtung kann für eine Kalibrierung des Stollenbandes vorgesehen sein, dass in jedem Stollen des Stollenbandes ein RFID-Chip angeordnet ist. Dieser kann über einen stationär angeordneten Sensor, der beispielsweise an einer der Seitenwände angeordnet ist, ausgelesen werden. Bei einem Rückfahren des Stollenbandes um beispielsweise bis zu ein Förderfach ist sichergestellt, dass ein Stollen an dem Sensor vorbeigeführt wird, so dass die Position des Stollenbandes durch den erkannten RFID-Chip erkannt werden kann. Grundsätzlich ist auch möglich, dass nicht in jedem Stollen ein RFID-Chip angeordnet ist, sondern nur in einigen. In diesem Fall ist jedoch für eine Kalibrierung notwendig, dass das Stollenband so lange verfahren wird, bis der Sensor einen RFID-Chip in einem Stollen erkennt, so dass die zuvor beschriebene vorteilhafte Funktion, dass keine Fehlbefüllung erfolgt, nicht notwendigerweise gegeben ist. Grundsätzlich würde es auch ausreichend sein, wenn lediglich in einem Stollen ein RFID-Chip angeordnet ist, wobei in diesem Fall das Stollenband je nach Position des Stollenbandes bei Fehlfunktion über teilweise einen langen Weg zur Kalibrierung verfahren werden muss.

Grundsätzlich sind bei der erfindungsgemäßen Tablettenportioniervorrichtung mit Abpackvorrichtung und Verpackungsvorrichtung auch andere Möglichkeiten zur Kalibrierung des Stollenbandes denkbar. Anstelle eines RFID-Chips können beispielsweise auch optische Markierungen an den Stollen vorgesehen sein, die über einen optischen Sensor erkannt werden. Für die Kalibrierung des Stollenbandes ist es grundsätzlich nur notwendig, eine eindeutige Position eines festgelegten Stollens festzustellen.

Bei der erfindungsgemäßen Tablettenportioniervorrichtung mit Abpackvorrichtung und Verpackungsvorrichtung ist vorzugsweise vorgesehen, dass die Übergabeöffnung der vorzugsweise als Ausgabekopf ausgebildeten Ausgabeeinrichtung an die Größe einer Öffnung einer Verpackung oder an die Größe einer Einfüllöffnung der Verpackungsvorrichtung angepasst ist. Auf diese Weise kann sichergestellt werden, dass eine in einem Förderfach aufgenommene Tablettenportion in zuverlässiger Weise in die Verpackung übergeben wird oder in die Einfüllöffnung der Verpackungsvorrichtung fällt.

Bei der erfindungsgemäßen Tablettenportioniervorrichtung mit Abpackvorrichtung und Verpackungsvorrichtung ist vorzugsweise vorgesehen, dass die Verpackungsvorrichtung mehrere Einfüllfächer mit jeweils einer Einfüllöffnung aufweist, die eine an eine Verpackung mit mehreren Fächern (z.B. eine Blisterkarte) angepasster Anordnung aufweisen, wobei die Böden der Einfüllfächer durch eine oder mehrere Schieber gebildet sind, über den oder die die Einfüllfächer an der Unterseite öffenbar sind und wobei die Tablettenportionen in jeweils eines der Einfüllfächer einfüllbar sind. Durch mehrere Einfüllfächer lassen sich Verpackungen mit mehreren Fächern in vorteilhafter Weise befüllen. Beispielsweise können zunächst die Einfüllfächer der Verpackungsvorrichtung befüllt werden, bevor anschließend durch das Öffnen der Böden durch den oder die Schieber die in die Einfüllfächer eingefüllten Tablettenportionen an die Verpackung übergeben werden. Durch das Vorsehen der Einfüllfächer der Verpackungsvorrichtung kann somit ein Puffer ermöglicht werden, so dass die Einfüllfächer befüllt werden können, ohne dass beispielsweise eine Verpackung bereits in ihrer Befüllposition ist. So kann beispielsweise eine zuvor befüllte Verpackung ausgegeben oder entnommen werden, ohne dass ein Einfüllvorgang in die Verpackungsvorrichtung unterbrochen werden muss. Dadurch ist eine vorteilhafte Befüllung von Verpackungen möglich.

Bei der erfindungsgemäßen Tablettenportioniervorrichtung mit Abpackvorrichtung und Verpackungsvorrichtung kann vorgesehen sein, dass die Einfüllfächer an einem horizontal in zwei Richtungen bewegbaren Tisch angeordnet sind. Somit sind die Einfüllfächer in vorteilhafter Weise mittels des bewegbaren Tisches bewegbar und können unterhalb der Übergabeöffnung der Ausgabeeinrichtung positioniert werden. Auf diese Weise sind die Einfüllfächer in vorteilhafter Weise mit Tablettenportionen befüllbar, indem ein Einfüllfach unter der Übergabeöffnung der Ausgabeeinrichtung positioniert wird und die Fördervorrichtung anschließend in Förderrichtung verfahren wird, so dass ein mit einer Tablettenportion befülltes Förderfach sich im Bereich der Übergabeöffnung befindet. Die sich in dem Förderfach befindlichen Tablettenportionen fallen schwerkraftbedingt aus dem Förderfach in das Einfüllfach der Verpackungsvorrichtung. Anschließend kann mittels des Tisches ein anderes Einfüllfach unter der Übergabeöffnung positioniert werden und die Fördervorrichtung wird erneut betätigt. Auf diese Weise erfolgt eine Übergabe von Tablettenportionen von der Fördervorrichtung an die Verpackungsvorrichtung in besonders vorteilhafter Weise.

Bei der erfindungsgemäßen Tablettenportioniervorrichtung mit Abpackvorrichtung und Verpackungsvorrichtung kann in vorteilhafter Weise vorgesehen sein, dass die Verpackungsvorrichtung einen Verpackungshalter zum Halten einer Verpackung in einer Befüllposition aufweist, wobei der Tisch zur Befüllung der Verpackung oberhalb des Verpackungshalters positionierbar ist. Über den Verpackungshalter lässt sich eine Verpackung mit mehreren Fächern in besonders vorteilhafter Weise unterhalb des Tisches positionieren. Wenn alle oder ein Teil der Einfüllfächer des Tisches mit Tablettenportionen befüllt sind, kann einer der Schieber oder der Schieber bewegt werden, so dass die Tablettenportionen aus den Einfüllfächern in die Fächer der Verpackung fallen. Dabei kann vorgesehen sein, dass der Verpackungshalter die Verpackung nach der Befüllung aus der Befüllposition in eine Entnahmeposition transportiert. Über den Verpackungshalter lässt sich somit die Verpackung in vorteilhafter Weise zum Entnehmen positionieren. Gleichzeitig können während des Entnahmevorgangs der Verpackung die Einfüllfächer in dem Tisch bei geschlossener Position des oder der Schieber weiter befüllt werden. Der Verpackungshalter kann beispielsweise als Lift ausgebildet sein, der die Verpackung in die Entnahmeposition anhebt, so dass diese in einer für den Benutzer angenehmen Höhe angeordnet ist. Die Verpackungsvorrichtung kann eine Entnahmevorrichtung aufweisen, an der die Verpackung versiegelbar ist, wobei sich die Entnahmeposition der Verpackung in der Entnahmevorrichtung befindet. Der Verpackungshalter kann einen Boden aufweisen, der sich unterhalb der Verpackung erstreckt. Dies hat den Vorteil, dass, falls eine Verpackung nicht korrekt oder nicht in den Verpackungshalter eingesetzt wird und der Befüllvorgang weiter durchgeführt wird, die aus den Einfüllfächern herausfallenden Tablettenportionen von dem Verpackungshalter aufgefangen werden können und somit nicht verschüttet werden.

Bei der erfindungsgemäßen Tablettenportioniervorrichtung mit Abpackvorrichtung und Verpackungsvorrichtung kann vorgesehen sein, dass der Tisch ein Ausschussfach aufweist. In dem Ausschussfach können beispielsweise falsch portionierte Tablettenportionen eingefüllt werden. Das Ausschussfach ist mittels des Tischs unterhalb der Übergabeöffnung positionierbar. Sollte während des Betriebs der Tablettenportioniervorrichtung festgestellt werden, dass in einem Förderfach der Fördervorrichtung eine falsche Tablettenportion eingegeben wurde, kann somit ohne eine langwierige Unterbrechung des Betriebs die falsche Tablettenportion in das Ausschussfach umgefüllt werden.

Grundsätzlich kann bei der erfindungsgemäßen Tablettenportioniervorrichtung mit Abpackvorrichtung und Verpackungsvorrichtung auch vorgesehen sein, dass der Tisch eine Verpackung aufnimmt, so dass keine Einfüllfächer und Schieber vorgesehen sind. Die Tablettenportionen werden dann in diesem Fall direkt von der Fördervorrichtung in die Fächer der Verpackung eingefüllt. Der bewegbare Tisch funktioniert in diesem Fall als Verpackungshalter.

Bei der erfindungsgemäßen Tablettenportioniervorrichtung mit Abpackvorrichtung und Verpackungsvorrichtung ist vorzugsweise vorgesehen, dass der Tisch über zwei seitlich gegenüberliegend an dem Tisch angeordnete L-förmige Träger an einer Antriebsvorrichtung befestigt ist, wobei der oder die Schieber zum Öffnen der Böden der Einfüllfächer zwischen die L-förmigen Träger bewegbar ist bzw. sind. Eine derartige Konstruktion hat sich als besonders vorteilhaft herausgestellt, da eine platzsparende Konstruktion ermöglicht ist. Durch das Vorsehen der L-förmigen Träger ist eine Aussparung gebildet, durch die die Schieber zum Öffnen der Böden der Einfüllfächer bewegbar sind, so dass die Schieber in vorteilhafter Weise in Richtung der Träger und somit in Richtung der Befestigung des Tisches bewegt werden können. Somit ist der Tisch von bis zu fünf Seiten in vorteilhafter Weise zugänglich, so dass der Verpackungshalter in vorteilhafter Weise unter den Tisch geführt werden kann. Dadurch ist eine platzsparende Konstruktion der Tablettenportioniervorrichtung möglich.

Bei der erfindungsgemäßen Tablettenportioniervorrichtung mit Abpackvorrichtung und Verpackungsvorrichtung kann vorgesehen sein, dass oberhalb der Fördervorrichtung eine Kamera angeordnet ist, die auf die Fördervorrichtung gerichtet ist. Über die Kamera lassen sich Bilddaten von den Förderfächern und ihrem Inhalt erstellen, über die mittels Bildauswertung ein Inhalt der Förderfächer bestimmbar ist. Dadurch lässt sich kontrollieren, welche Tabletten bzw. Tablettenportionen sich in den Förderfächern befinden. Bei einer Fördervorrichtung mit einer Abdeckung weist die Abdeckung eine Aussparung auf, durch die die Kamera auf die Förderfächer blicken kann.

Bei der erfindungsgemäßen Tablettenportioniervorrichtung mit Abpackvorrichtung und Verpackungsvorrichtung kann in vorteilhafter Weise vorgesehen sein, dass in der Transportposition der Fördervorrichtung die Ausgabevorrichtung in Förderrichtung mit einem Abstand A, der mindestens den Abstand D beträgt, von einem zweiten Umlenkbereich des Stollenbands beabstandet ist. Der zweite Umlenkbereich ist dabei zumindest der Bereich des Stollenbandes, der durch eine Umlenkung in einem zweiten Endabschnitt der Fördervorrichtung, die unterhalb der Ausgabevorrichtung angeordnet ist, gekrümmt ist. Durch den Abstand A, der mindestens den Abstand D beträgt, ist in Transportrichtung vor der Ausgabevorrichtung ein Pufferfach gebildet, so dass beispielsweise bei einer Kalibrierung das Stollenband entgegen der Förderrichtung bewegt werden kann. Es wird daher verhindert, dass ein zuvor unterhalb der Ausgabevorrichtung befindliches Förderfach, das mit einer Tablettenportion befüllt wurde, durch ein Verfahren des Stollenbands um ein Fach entgegen der Förderrichtung in den Umlenkbereich gelangt und dort die sich in dem Förderfach befindliche Tablettenportion herausfallen kann. Grundsätzlich ist es auch möglich, dass die Ausgabevorrichtung in Förderrichtung unmittelbar an den Umlenkbereich angrenzt, wobei dann vorzugsweise der Umlenkbereich abgedeckt ist, um ein Pufferfach zu bilden.

Auf diese Weise ist die Kalibrierung des Stollenbandes in vorteilhafter Weise möglich.

Im Folgenden wird unter Bezugnahme auf die nachfolgenden Figuren die Erfindung näher erläutert. Es zeigen
- Figur 1: eine schematische Gesamtansicht der erfindungsgemäßen Tabletten portioniervorrichtung,
- Figur 2: eine Detailansicht der Fördervorrichtung der Tablettenportioniervorrichtung der Figur 1 in der Transportposition,
- Figur 3: eine weitere Detailansicht der Fördervorrichtung,
- Figur 4: eine Detailansicht der Ausgabeeinrichtung der Fördervorrichtung der Figur 3 ohne Seitenwand der Fördervorrichtung und
- Figur 5a bis 5c: perspektivische Ansichten der Verpackungsvorrichtung der erfindungsgemäßen Tablettenportioniervorrichtung in unterschiedlichen Befüllungsstadien.

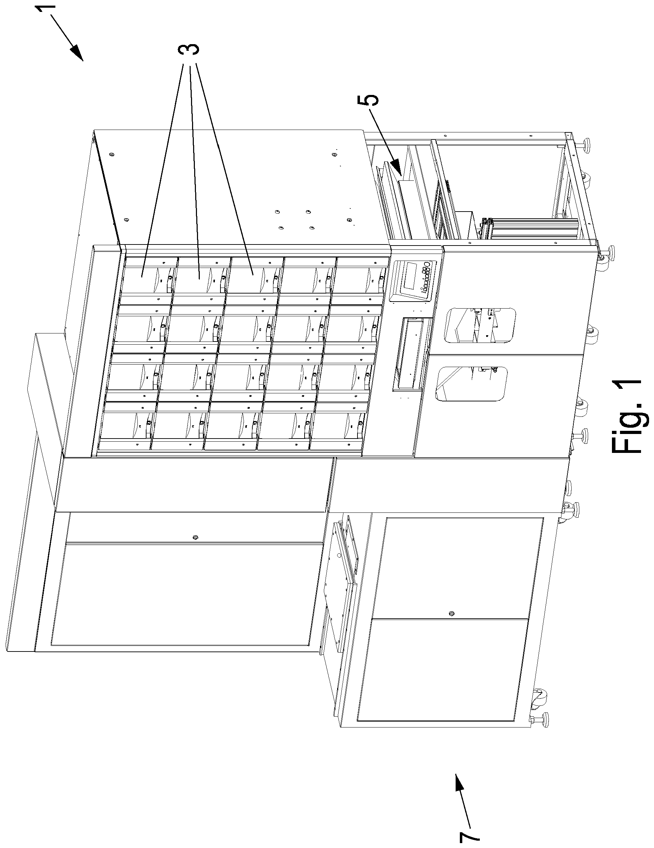

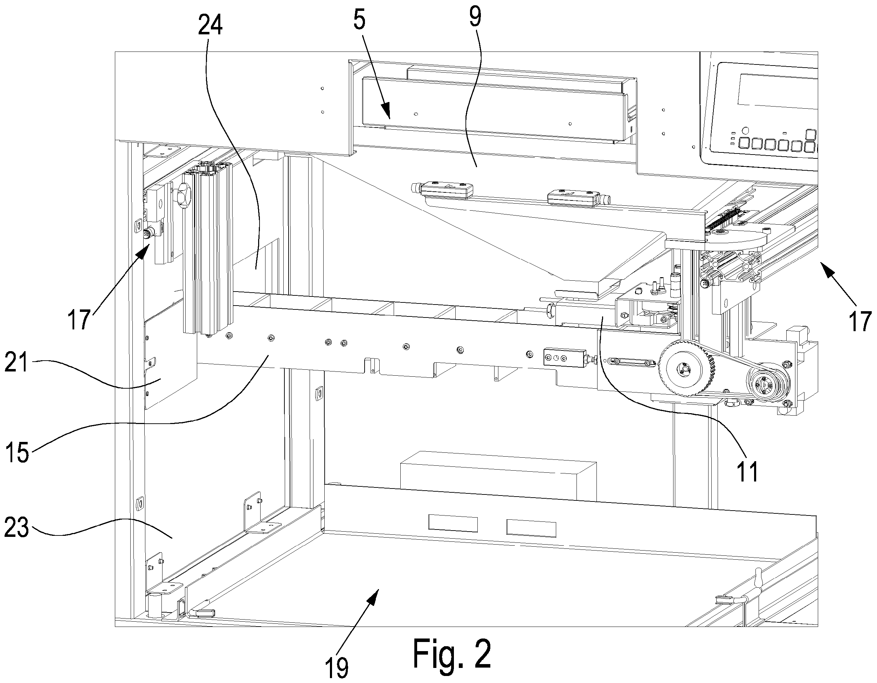

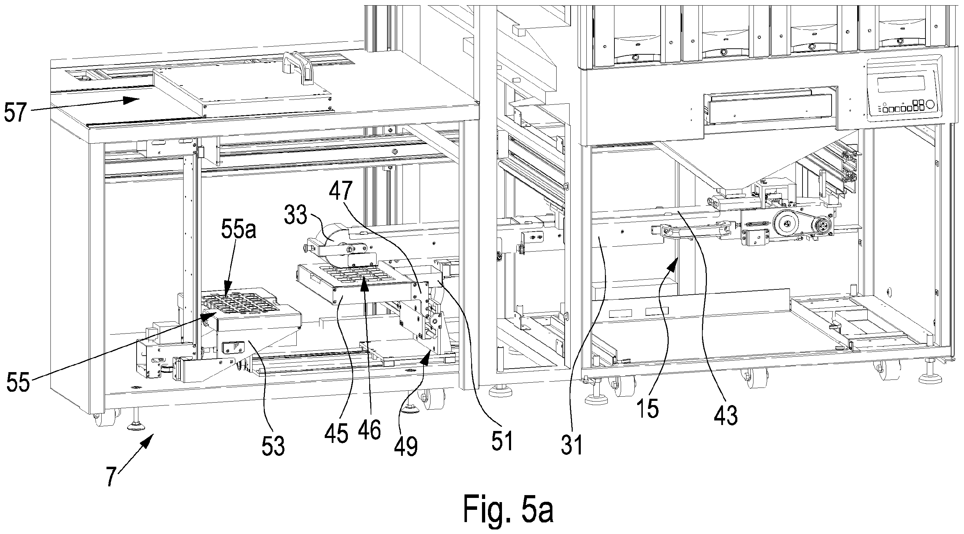

In Figur 1 ist eine erfindungsgemäße Tablettenportioniervorrichtung 1 schematisch in einer perspektivischen Darstellung gezeigt. Die Tablettenportioniervorrichtung 1 weist mehrere Tablettenbehälter 3 auf, die in einem ersten Teil der Tablettenportioniervorrichtung oberhalb einer Sammelvorrichtung 5 angeordnet sind, die am besten in Figur 2 ersichtlich ist. Neben dem ersten Teil der erfindungsgemäßen Tablettenportioniervorrichtung 1, der die Tablettenbehälter 3 und die Sammelvorrichtung 5 aufweist, ist ein zweiter Teil angeordnet, der eine Verpackungsvorrichtung 7 für Tablettenportionen umfasst. Die Verpackungsvorrichtung 7 ist am besten aus den Figuren 5a bis 5c ersichtlich.

Wie aus Figur 2 hervorgeht, weist die Sammelvorrichtung 5 eine Trichtervorrichtung 9 sowie eine Ausgabevorrichtung 11 auf. Die Trichtervorrichtung 9 mündet in die Ausgabevorrichtung 11. Tabletten werden aus den Tablettenbehältern ausgegeben und fallen in die Trichtervorrichtung 9 der Sammelvorrichtung 5 und werden zu der Ausgabevorrichtung 11 geleitet. Die Ausgabevorrichtung 11 gibt die in der Sammelvorrichtung 5 befindlichen Tabletten als eine Tablettenportion aus. Hierzu kann die Ausgabevorrichtung 11 eine in horizontaler Ebene verschwenkbare Verschlussplatte aufweisen, die eine nach unten gerichtete Öffnung der Ausgabevorrichtung 11 schließt bzw. öffnet.

In der in Figur 2 dargestellten Situation ist unterhalb der Ausgabevorrichtung 11 eine sich in eine Förderrichtung erstreckende Fördervorrichtung 15 angeordnet, über die die Tablettenportionen von der Ausgabevorrichtung 11 zu der Verpackungsvorrichtung 7 transportierbar sind.

Die Fördervorrichtung 15 ist über eine Schienenvorrichtung 17 gelagert. Die Fördervorrichtung 15 kann aus der in Figur 2 dargestellten Transportposition mittels der Schienenvorrichtung 17 horizontal in eine Richtung quer zu der Förderrichtung in eine Parkposition verschoben werden. Bei dem in Figur 2 dargestellten Ausführungsbeispiel wird die Fördervorrichtung 15 somit nach hinten verschoben. Dadurch ist ein sich unterhalb der Ausgabevorrichtung 11 befindlicher Raum 19 nahezu vollständig freigegeben, so dass in diesem eine nicht dargestellte Abpackvorrichtung angeordnet werden kann. Die Abpackvorrichtung kann beispielsweise die Tablettenportionen portionsweise in Einzelbeutel verpacken. Um die Fördervorrichtung 15 und somit die Verpackungsvorrichtung 7 benutzen zu können, wird die Abpackvorrichtung aus ihrer Benutzungsposition, in der sie unterhalb der Ausgabevorrichtung 11 angeordnet ist, in eine Verstauposition bewegt, die beispielsweise auch außerhalb der Tablettenportioniervorrichtung 1 angeordnet sein kann. Die Fördervorrichtung 15 wird dann wieder in die in Figur 2 dargestellte Transportposition bewegt.

An der Fördervorrichtung 15 ist ein Wandabschnitt 21 angeordnet, der beim Verschieben der Fördervorrichtung 15 eine in einer Seitenwand gebildete Öffnung 24 für die Fördervorrichtung verschließt, so dass in der Parkposition der Fördervorrichtung 15 die Seitenwand nahezu vollständig verschlossen ist. Dadurch kann verhindert werden, dass beispielsweise bei dem Einsetzen der Abpackvorrichtung ein Zugang zwischen dem Raum 19 und dem benachbart angeordneten Raum für die Verpackungsvorrichtung 7 gegeben ist, durch den ein Benutzer versehentlich greift. Ferner kann verhindert werden, dass im Betrieb der erfindungsgemäßen Tablettenportioniervorrichtung 1 mit der Abpackvorrichtung ein Zugriff von dem Raum, in dem die Verpackungsvorrichtung 7 angeordnet ist, in den Gefahrenbereich des Raumes 19, in dem die Abpackvorrichtung im Betrieb ist, möglich ist.

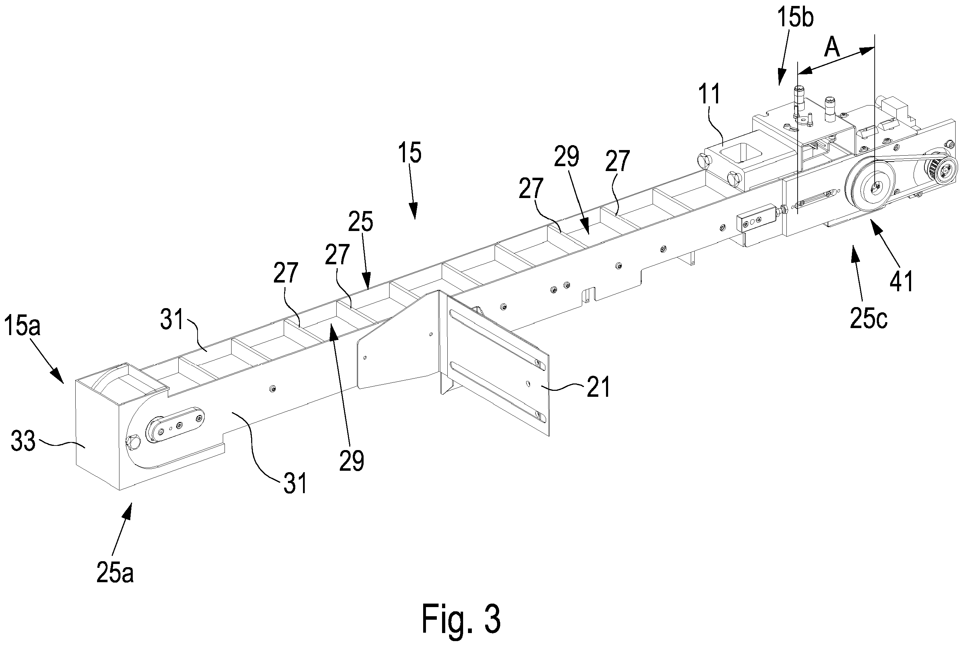

In Figur 3 ist die in Figur 2 dargestellte Fördervorrichtung 15 im Detail dargestellt, wobei zu Verdeutlichungszwecken andere Teile der Tablettenportioniervorrichtung weitestgehend ausgeblendet sind.

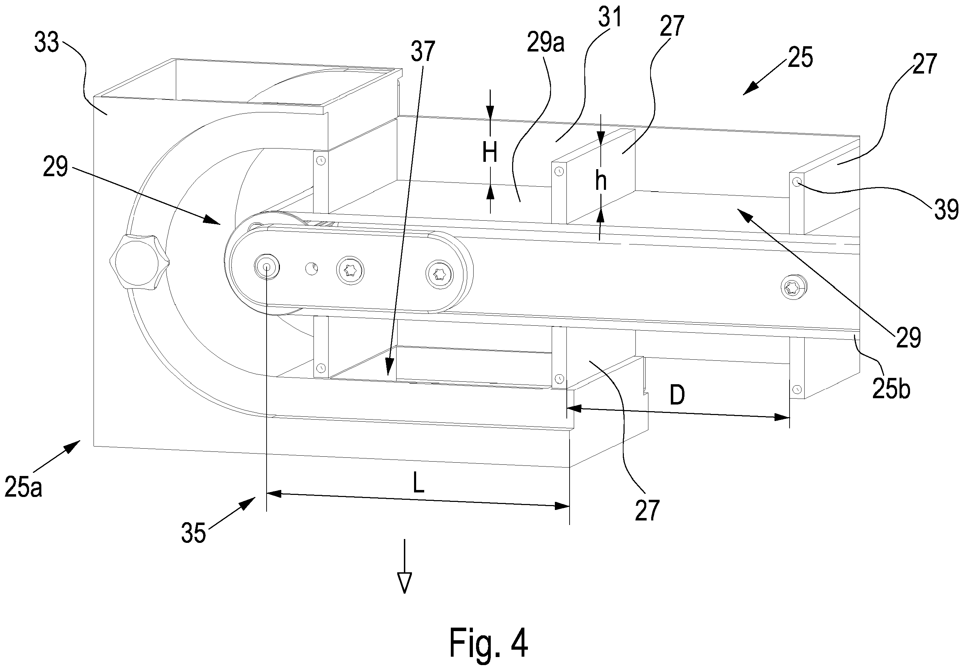

Die Fördervorrichtung 15 besteht aus einem umlaufenden Stollenband 25 mit abstehenden Stollen 27. Die abstehenden Stollen 27 sind, wie aus Figur 4 ersichtlich ist, in einem Abstand D beabstandet und begrenzen Förderfächer 29. Die Ausgabevorrichtung 11 ist an die Förderfächer 29 angepasst und Tablettenportionen werden portionsweise in jeweils ein Förderfach 29 ausgegeben.

Ferner weist die Fördervorrichtung 15 an beiden Seiten jeweils eine Seitenwand 31 auf, die eine seitliche Begrenzung der Förderfächer 29 bildet.

An einem ersten Endabschnitt 15a, der im Bereich der Verpackungsvorrichtung 7 der erfindungsgemäßen Tablettenportioniervorrichtung angeordnet ist, bildet die Fördervorrichtung 15 einen Umlenkbereich 25a des Stollenbandes 25. An dem ersten Umlenkbereich des Stollenbandes 25 ist eine Ausgabeeinrichtung 33, die als Ausgabekopf ausgebildet ist, angeordnet, der ein in dem Umlenkbereich 25a angeordnetes Förderfach 29 abdeckt.

Mittels der Ausgabeeinrichtung 33 kann erreicht werden, dass Tablettenportionen, die in einem Förderfach 29 angeordnet sind, nicht bereits im Umlenkbereich 25a des Stollenbandes 25 schwerkraftbedingt aus dem Förderfach 29 herausfallen, sondern eine schwerkraftbedingte Übergabe an die Verpackungsvorrichtung 7 erst an einer bestimmten Position erfolgt, wie am besten aus Figur 4 ersichtlich ist.

In Figur 4 ist der erste Umlenkbereich 25a des Stollenbandes 25 sowie die Ausgabeeinrichtung 33 im Detail dargestellt, wobei die fordere Seitenwand 31 zu Verdeutlichungszwecken ausgeblendet ist. Die Ausgabeeinrichtung 33 erstreckt sich zumindest in dem ersten Umlenkbereich 25a des Stollenbandes 25, wobei der erste Umlenkbereich 25a der Bereich des Stollenbandes 25 ist, der durch die Umlenkung gekrümmt ist. Ferner erstreckt sich die Ausgabeeinrichtung 33 ausgehend von dem ersten Umlenkbereich 25a unterhalb des Untertrums 25b des Stollenbandes 25 mit einer Länge L, wobei die Länge L größer ist als der Abstand D zwischen zwei benachbarten Stollen 27. In dem sich mit der Länge L erstreckenden Teil der Ausgabeeinrichtung 33 wird ein Übergabebereich 35 gebildet, der eine Übergabeöffnung 37 aufweist. Die Übergabeöffnung 37 bildet somit einen Ausgang für eine in einem Förderfach 29 angeordnete Tablettenportion, so dass diese schwerkraftbedingt an die Verpackungsvorrichtung 7 übergeben werden kann, wie durch den Pfeil angedeutet ist.

Die Seitenwand 31 erstreckt sich seitlich des Stollenbands 25 in vertikaler Richtung und steht über einen Förderfachboden 29a mit einer Höhe H über, die mindestens einer Höhe h eines Stollens 27 des Stollenbands 25 beträgt.

In jedem Stollen 27 ist ein RFID-Chip 39 angeordnet. Dieser kann über einen nicht dargestellten Sensor sensiert werden, so dass die Position eines Stollens 27 eindeutig identifizierbar ist.

Die Ausgabeeinrichtung 33 bietet einerseits die Möglichkeit, durch die Übergabeöffnung 37 eine definierte Position für die Ausgabe der Tablettenportionen bereitzustellen. Darüber hinaus wird durch die Abdeckung des Förderfachs 29 im ersten Umlenkbereich 25a erreicht, dass eine Tablettenportion, die in diesem Förderfach 29 angeordnet ist, noch nicht schwerkraftbedingt ausgegeben wird, so dass im Falle einer Fehlfunktion das Stollenband 25 um ein Förderfach 29 rückwärts bewegt werden kann, ohne dass Zweifel bestehen, ob eine Tablettenportion, die zuvor in dem im Umlenkbereich 25a befindlichen Förderfach 29 angeordnet war, bereits ausgegeben wurde oder nicht.

Eine ähnliche Konstruktion wie bei der Ausgabeeinrichtung 33 ist auch im zweiten Umlenkbereich 25c, der an dem von dem ersten Umlenkbereich 25a abgewandten zweiten Endabschnitt 15b der Fördervorrichtung 15 angeordnet ist, vorgesehen. Mittels einer entsprechenden Abdeckung 41 ist auch ein in dem zweiten Umlenkbereich 25c angeordnetes Förderfach 29 abgedeckt.

Die Ausgabevorrichtung 11 ist mit einem Abstand A von dem zweiten Umlenkbereich des Stollenbandes beabstandet, wobei der Abstand A mindestens dem Abstand D entspricht, so dass sichergestellt ist, dass bei einer Bewegung des Stollenbands 25 entgegen der Förderrichtung um bis zu eine Wegstrecke mit dem Betrag D keine Tablettenportionen in den zweiten Umlenkbereich 25a gelangen.

Wie am besten aus Figur 5a ersichtlich ist, kann die Fördervorrichtung 15 eine Abdeckplatte 43 aufweisen, die die Seitenwände 31 oberhalb des Stollenbandes 25 verbindet und somit einen Schutz der in den Förderfächern 29 angeordneten Tablettenportionen bildet. Ferner wird mittels der Abdeckplatte 43 verhindert, dass bei einem abrupten Anfahren oder Stoppen des Stollenbandes 25 einzelne Tabletten aus einem Förderfach 29 herausfallen oder in ein benachbartes Förderfach 29 fallen können.

Oberhalb der Fördervorrichtung 15 kann eine nicht dargestellte Kamera angeordnet sein, die auf das Stollenband 25 gerichtet ist. Hierzu kann beispielsweise die Abdeckplatte 43 eine Aussparung aufweisen. Mittels der Kamera lässt sich eine Tablettenportion, die in einem Förderfach 29 angeordnet ist, optisch erfassen und mittels Bildauswertung hinsichtlich der Zusammenstellung der Tabletten bestimmen. Dadurch kann festgestellt werden, ob die gewünschte Tablettenportion in einem Förderfach 29 angeordnet ist.

In den Figuren 5a bis 5c ist die Verpackungsvorrichtung 7 in unterschiedlichen Befüllpositionen dargestellt.

Die Verpackungsvorrichtung 7 weist einen Tisch 45 auf. In dem Tisch 45 sind mehrere Einfüllfächer 46 mit jeweils einer Einfüllöffnung angeordnet. Die Böden der Einfüllfächer 46 werden durch einen Schieber gebildet, über den die Einfüllfächer 46 an ihrer Unterseite geöffnet werden können. Der Tisch 45 ist über L-förmige Träger 47 an einer Antriebsvorrichtung 49 angeordnet und wird über die Antriebsvorrichtung 49 in einer horizontalen Ebene in zwei Richtungen bewegt. Dadurch kann jede der Einfüllöffnungen unterhalb der Übergabeöffnung 37 der Ausgabeeinrichtung 33 positioniert werden. Die Übergabeöffnung 37 ist dabei idealerweise an die Größe der Einfüllöffnungen der Einfüllfächer 46 angepasst. Der Tisch 45 wird nun so bewegt, dass die Einfüllfächer 46 jeweils einzeln durch eine in einem Förderfach 29 angeordnete Tablettenportion befüllt werden können.

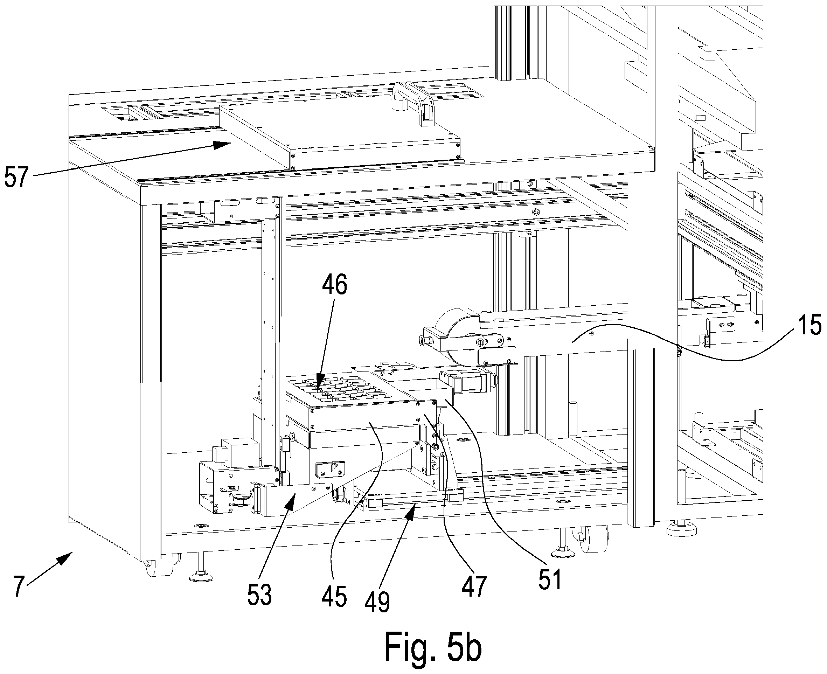

Sofern beispielsweise über die Kamera festgestellt wird, dass in einem Förderfach 29 eine falsche Tablettenportion angeordnet ist, kann diese in ein Ausschussfach 51 des Tisches 45 ausgegeben werden. Sobald die gewünschte Anzahl von Einfüllfächern (46) gefüllt ist, wird der Tisch 45, wie am besten in Figur 5b ersichtlich ist, über einen Verpackungshalter 53 mit einer Verpackung 55 bewegt. Die Verpackung 55 weist mehrere Fächer 55a auf und ist beispielsweise ein sogenanntes Tablett, in dem mehrere Tablettenportionen nach ihrem Einnahmezeitpunkt sortiert eingefüllt werden können.

Die Anordnung der Einfüllfächer 46 in dem Tisch 45 ist an die Fächer 55a der Verpackung 55 angepasst. Wenn nun, wie in Figur 5b dargestellt ist, der Tisch 45 über den Verpackungshalter 53 mit der Verpackung 55 bewegt worden ist, können die Einfüllfächer 46 in dem Tisch 45 durch die Bewegung des Schiebers geöffnet werden, so dass deren Inhalt in die Fächer 55a der Verpackung 55 fallen. Durch die L-förmigen Träger 47, die beabstandet angeordnet sind, ist ein vorteilhafter Freiraum gebildet, so dass der Schieber zwischen den L-förmigen Trägern 47 zum Öffnen der Einfüllfächer 46 bewegt werden kann.

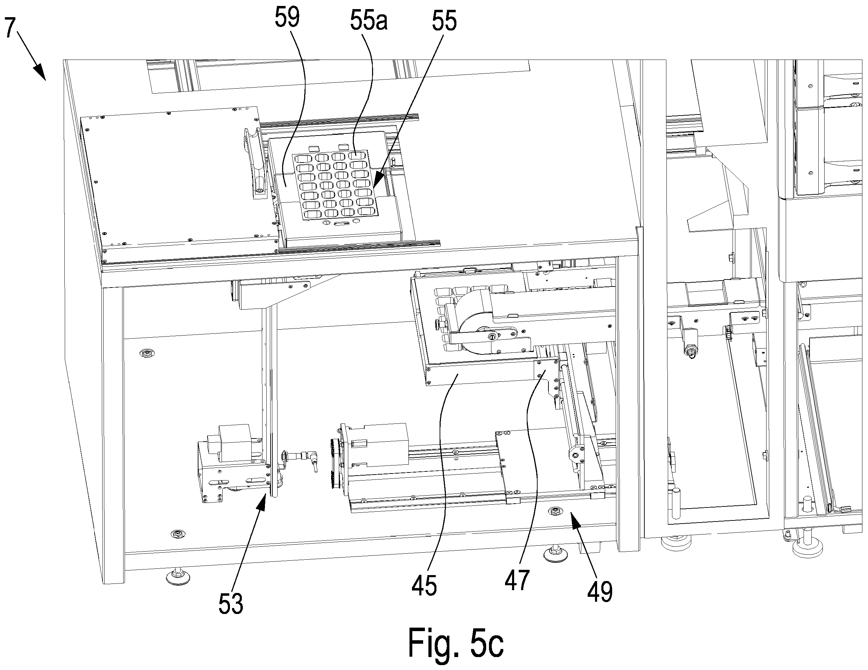

Der Verpackungshalter 53 ist insbesondere mit einer Liftfunktion ausgestattet, so dass der Verpackungshalter 53 die Verpackung nach der Befüllung aus der in Figur 5b dargestellten Befüllposition in die in der Figur 5c dargestellte Entnahmeposition transportieren kann. Zur Entnahme einer befüllten Verpackung 55 weist die Verpackungsvorrichtung 7 eine Entnahmevorrichtung 57 auf, in die die Verpackung mittels des Verpackungshalters 53 bewegt werden kann. In der Entnahmevorrichtung 57 kann die Verpackung 55 versiegelt werden.

Der Verpackungshalter 53 weist ferner einen Boden 59 auf, der unterhalb der Verpackung 55 angeordnet ist. Sollte bei dem Betrieb durch eine Fehlbedienung oder eine Fehlfunktion eine Verpackung 55 nicht in den Verpackungshalter 53 eingesetzt werden, werden durch den Boden 59 von dem Tisch 45 an den Verpackungshalter 53 übergebene Tablettenportionen aufgefangen, so dass ein Verschütten verhindert wird.

Die erfindungsgemäße Tablettenportioniervorrichtung kann besonders flexibel eingesetzt werden, da sie sowohl ein Befüllen von Verpackungen 55 mit mehreren Fächern 55a über die Verpackungsvorrichtung 7 als auch ein Abpacken von Tablettenportionen in Einzelbeutel mittels der Abpackvorrichtung ermöglicht.

### Bezuaszeichenliste

1 Tablettenportioniervorrichtung
3 Tablettenbehälter
5 Sammelvorrichtung
7 Verpackungsvorrichtung
9 Trichtervorrichtung
11 Ausgabevorrichtung
15 Fördervorrichtung
15a erster Endabschnitt
15b zweiter Endabschnitt
17 Schienenvorrichtung
19 Raum
21 Wandabschnitt
24 Öffnung
25 Stollenband
25a erster Umlenkbereich
25b Untertrum
25c zweiter Umlenkbereich
27 Stollen
29 Förderfach
29a Förderfachboden
31 Seitenwand
33 Ausgabeeinrichtung
35 Übergabebereich
37 Übergabeöffnung
39 RFID-Chip
41 Abdeckung
43 Abdeckplatte
45 Tisch
46 Einfüllfächer
47 Träger
49 Antriebsvorrichtung
51 Ausschussfach
53 Verpackungshalter
55 Verpackung
55a Fächer
57 Entnahmevorrichtung
59 Boden

## Patentansprüche

1. Tablettenportioniervorrichtung (1) mit mehreren Tablettenbehältern (3), mit einer unterhalb der Tablettenbehälter (3) angeordneten Sammelvorrichtung (5) mit Ausgabevorrichtung (11) und mit einer Verpackungsvorrichtung (7) zum portionsweise Verpacken von Tablettenportionen, wobei die Sammelvorrichtung (5) Tabletten aus den Tablettenbehältern (3) empfängt und über die Ausgabevorrichtung (11) als Tablettenportionen ausgibt, wobei eine sich in eine Förderrichtung erstreckende Fördervorrichtung (15) mit mehreren Förderfächern (29) die Ausgabevorrichtung (11) mit der Verpackungsvorrichtung (7) verbindet, wobei die Ausgabevorrichtung (11) jeweils eine Tablettenportion in eines der Förderfächer (29) ausgibt und die Fördervorrichtung (15) die Tablettenportionen zu der Verpackungsvorrichtung (7) transportiert,
**dadurch gekennzeichnet, dass** die Fördervorrichtung (15) auf einer Schienenvorrichtung (17) gelagert ist und über die Schienenvorrichtung (17) in eine horizontale Richtung quer zu der Förderrichtung der Fördervorrichtung (15) von einer Transportposition, in der die Fördervorrichtung (15) Tablettenportionen von der Ausgabevorrichtung (11) zu der Verpackungsvorrichtung (7) transportiert, in eine Parkposition bewegbar ist.

2. Tablettenportioniervorrichtung nach Anspruch 1, **dadurch gekennzeichnet, dass** die Ausgabevorrichtung (11) einen steuerbaren Auslass aufweist, über den die Tablettenportionen gesteuert ausgegeben werden, wobei vorzugsweise der steuerbare Auslass eine schwenkbare Verschlussplatte aufweist, und/oder dass die Sammelvorrichtung (5) eine Trichtervorrichtung (9) aufweist, die mit der Ausgabevorrichtung (11) verbunden ist.

3. Tablettenportioniervorrichtung nach Anspruch 1 oder 2, **gekennzeichnet durch** eine bewegbare Abpackvorrichtung, die in der Parkposition der Fördervorrichtung (15) unterhalb der Ausgabevorrichtung (11) zum Empfang von Tablettenportionen von der Ausgabevorrichtung (11) anordnenbar ist, wobei die Abpackvorrichtung aus einer Benutzungsposition unterhalb der Ausgabevorrichtung (11) zur Freigabe eines Bereichs unterhalb der Sammelvorrichtung (5) für die Fördervorrichtung in eine Verstauposition bewegbar ist.

4. Tablettenportioniervorrichtung nach einem der Ansprüche 1 bis 3, **dadurch gekennzeichnet, dass** die Fördervorrichtung (15) aus einem umlaufenden Stollenband (25) mit abstehenden, voneinander mit einem Abstand D beabstandeten Stollen (27) besteht, wobei jeweils zwei benachbarte Stollen (27) jeweils eines der Förderfächer (29) an zumindest zwei Seiten begrenzen, wobei vorzugsweise die Fördervorrichtung (15) Seitenwände (31) aufweist, die seitlich neben dem Stollenband (25) angeordnet sind und die Förderfächer (29) zumindest in einem Transportbereich des Stollenbandes (25) an zwei weiteren Seiten begrenzen.

5. Tablettenportioniervorrichtung nach Anspruch 4, **dadurch gekennzeichnet, dass** die Fördervorrichtung (15) eine Ausgabeeinrichtung (33) ausweist, über den die Tablettenportionen portionsweise an die Verpackungsvorrichtung (7) übergeben werden und dass die Ausgabeeinrichtung (33) an einem ersten Umlenkbereich (25a) des Stollenbandes (25) angeordnet ist.

6. Tablettenportioniervorrichtung nach Anspruch 5, **dadurch gekennzeichnet, dass** die Ausgabeeinrichtung (33) zumindest in dem ersten Umlenkbereich (25a) an den Seitenwänden (31) anliegt und diese verbindet, wobei die Ausgabeeinrichtung (33) ein in dem ersten Umlenkbereich (25a) befindliches Förderfach (29) abdeckt, wobei vorzugsweise sich die Ausgabeeinrichtung (33) ausgehend von dem ersten Umlenkbereich (25a) unterhalb eines Untertrums (25b) des Stollenbandes (25) mit einer Länge L erstreckt und einen Übergabebereich (35) bildet, wobei die Länge L mindestens dem Abstand D zwischen zwei benachbarten Stollen (27) entspricht, wobei die Ausgabeeinrichtung (33) im Übergabebereich (35) eine Übergabeöffnung (37) aufweist, wobei vorzugsweise die Übergabeöffnung (37) an die Größe einer Öffnung einer Verpackung (55) oder an die Größe einer Einfüllöffnung der Verpackungsvorrichtung (7) angepasst ist.

7. Tablettenportioniervorrichtung nach einem der Ansprüche 4 bis 6, **dadurch gekennzeichnet, dass** in jedem Stollen (27) ein RFID-Chip (39) angeordnet ist.

8. Tablettenportioniervorrichtung nach Anspruch 1 bis 7, **dadurch gekennzeichnet, dass** die Verpackungsvorrichtung (7) mehrere Einfüllfächer (46) mit jeweils einer Einfüllöffnung aufweist, die eine an eine Verpackung (55) mit mehreren Fächern (55a) angepasste Anordnung aufweisen, wobei die Böden der Einfüllfächer (46) durch einen oder mehrere Schieber gebildet sind, über den oder die die Einfüllfächer (46) an der Unterseite öffenbar sind und wobei die Tablettenportionen in jeweils eines der Einfüllfächer (46) einfüllbar sind.

9. Tablettenportioniervorrichtung nach Anspruch 8, **dadurch gekennzeichnet, dass** die Einfüllfächer (46) an einem horizontal in zwei Richtungen bewegbaren Tisch (45) angeordnet sind, wobei vorzugsweise, die Verpackungsvorrichtung (7) einen Verpackungshalter (53) zum Halten einer Verpackung (55) in einer Befüllposition aufweist, wobei der Tisch (45) zur Befüllung der Verpackung (55) oberhalb des Verpackungshalters (53) positionierbar ist.

10. Tablettenportioniervorrichtung nach Anspruch 9, **dadurch gekennzeichnet, dass** der Verpackungshalter (53) die Verpackung (55) nach der Befüllung aus der Befüllposition in eine Entnahmeposition transportiert, wobei vorzugsweise die Verpackungsvorrichtung (7) eine Entnahmevorrichtung (57) aufweist, an der die Verpackung (55) versiegelbar ist, wobei sich die Entnahmeposition der Verpackung (55) in der Entnahmevorrichtung (57) befindet.

11. Tablettenportioniervorrichtung nach einem der Ansprüche 8 bis 10, **dadurch gekennzeichnet, dass** der Tisch (45) ein Ausschussfach (51) aufweist.

12. Tablettenportioniervorrichtung nach einem der vorangegangenen Ansprüche, **dadurch gekennzeichnet, dass** der Tisch (45) über zwei seitlich gegenüberliegend an dem Tisch (45) angeordnete L-förmige Träger (47) an einer Antriebsvorrichtung (49) befestigt ist, wobei der oder die Schieber zum Öffnen der Böden der Einfüllfächer (46) zwischen die L-förmigen Träger (47) bewegbar ist bzw. sind und/oder wobei eine oberhalb der Fördervorrichtung (15) angeordnete Kamera, die auf die Fördervorrichtung (15) gerichtet ist.

13. Tablettenportioniervorrichtung nach einem der Ansprüche 4 bis 12, **dadurch gekennzeichnet, dass** in der Transportposition der Fördervorrichtung (15) die Ausgabevorrichtung (11) in Förderrichtung mit einem Abstand A, der mindestens den Abstand D beträgt, von einem zweiten Umlenkbereich (25c) des Stollenbands (25) beabstandet ist.

14. Tablettenportioniervorrichtung (1) nach einem der vorangegangenen Ansprüche **gekennzeichnet, durch** eine Abpackvorrichtung zum Abpacken von Tablettenportionen, wobei die Abpackvorrichtung in einer Benutzungsposition unterhalb der Ausgabevorrichtung (11) angeordnet ist und die Tablettenportionen von der Ausgabevorrichtung (11) empfängt, wobei die Abpackvorrichtung aus der Benutzungsposition zur Freigabe eines Bereichs unterhalb der Sammelvorrichtung (15) in eine Verstauposition bewegbar ist, wobei in der Verstauposition der Abpackvorrichtung über die Fördervorrichtung (15) die Ausgabevorrichtung (11) mit der Verpackungsvorrichtung (7) verbindbar ist.

15. Tablettenportioniervorrichtung nach einem det Ansprüche 1 bis 14, **dadurch gekennzeichnet, dass** die Fördervorrichtung (15) eine Ausgabeeinrichtung (33) aufweist, über die die Tablettenportionen portionsweise an die Verpackungsvorrichtung (7) übergeben werden.

## Claims

1. A tablet portioning device (1) comprising a plurality of tablet containers (3), a collection device (5) arranged below the tablet containers (3) having a dispensing device (11), and a packaging device (7) for packaging tablet portions in portions, wherein the collection device (5) receives tablets from the tablet containers (3) and dispenses the same as tablet portions via the dispensing device (11), wherein a conveying device (15) having multiple conveying trays (29) and extending in a conveying direction connects the dispensing device (11) with the packaging device (7), wherein the dispensing device (11) dispenses a respective tablet portion into one of the conveying trays (29) and the conveying device (15) transports the tablet portions to the packaging device (7),
**characterized in that** the conveying device (15) is supported on a rail device (17) and can be moved via the rail device (17) in a horizontal direction transverse to the conveying direction of the conveying device (15) from a transport position, in which the conveying device (15) transports tablet portions from the dispensing device (11) to the packaging device (7), to a parking position.

2. The tablet portioning device according to claim 1, **characterized in that** the dispensing device (11) has a controllable outlet via which the tablet portions are dispensed in a controlled manner., wherein the controllable outlet preferably has a pivotable closure plate, and/or that the collection device (5) comprises a funnel device (9) connected with the dispensing device (11).

3. The tablet portioning device according to claim 1 or 2, **characterized by** a movable packing device which, in the parking position of the conveying device (15), can be arranged below the dispensing device (11) to receive tablet portions from the dispensing device (11), wherein the packing device is movable from a use position below the dispensing device (11) to a stow position to clear a region below the collection device (5) for the conveying device.

4. The tablet portioning device according to one of claims 1 to 3, **characterized in that** the conveying device (15) is formed by an endless studded belt (25) with protruding studs (27) spaced from one another by a distance D, two adjacent studs (27) respectively delimiting a respective one of the conveying trays (29) on at least two sides, wherein the conveying device (15) preferably has side walls (31) that are arranged laterally beside the studded belt (25) and delimit the conveying trays (29) on two further sides at least in a transport region of the studded belt (25).

5. The tablet portioning device according to claim 4, **characterized in that** the conveying device (15) comprises a dispensing unit (33) via which the tablet portions are transferred to the packaging device (7) in portions, and that the dispensing unit (33) is arranged in a first deflection region (25a) of the studded belt (25).

6. The tablet portioning device according to claim 5, **characterized in that** the dispensing unit (33) is in contact with the side walls (31) at least in the first deflection region (25a) and connects the same with each other, wherein the dispensing unit (33) covers a conveying tray (29) present in the first deflection region (25a), wherein the dispensing unit (33) preferably extends by a length L starting from the first deflection region (25a) below a lower run (25b) of the studded belt (25) and forms a transfer region (35), wherein the length L corresponds to at least the distance D between two adjacent studs (27), wherein the dispensing unit (33) has a transfer opening (37) in the transfer region (35), wherein the transfer opening (37) is preferably adapted to the size of an opening of a package (55) or to the size of a filling opening of the packaging device (7).

7. The tablet portioning device according to one of claims 4 to 6, **characterized in that** a RFID chip (39) is arranged in each stud (27).

8. The tablet portioning device according to one of claims 1 to 7, **characterized in that** the packaging device (7) comprises multiple filling trays (46) each having one filling opening, their arrangement being adapted to a package (55) with multiple compartments (55a), wherein the bottoms of the filling trays (46) are formed by one or more slides via which the filling trays (46) can be opened at their bottom side, and wherein the tablet portions can each be filled into one of the filling trays (46), respectively.

9. The tablet portioning device according to claim 8, **characterized in that** the filling trays (46) are arranged on a table (45) that is horizontally movable in two directions, wherein the packaging device (7) comprises a package holder (53) for holding a package (55) in a filling position, wherein the table (45) can be positioned above the package holder (53) for the purpose of filling the package (55).

10. The tablet portioning device according to claim 9, **characterized in that**, after filling, the package holder (53) transports the package (55) from the filling position to a removal position, wherein the packaging device (7) preferably comprises a removal device (57) at which the package (55) can be sealed, wherein the removal position of the package (55) is located in the removal device (57).

11. The tablet portioning device according to one of claims 8 to 10, **characterized in that** the table (45) comprises a waste tray (51).

12. The tablet portioning device according to one of the preceding claims, **characterized in that** the table (45) is fastened to a drive device (49) by two laterally opposite L-shaped brackets (47) arranged at the table (45), wherein the slide or the slides for opening the bottoms of the filling trays (46) can be moved between the L-shaped brackets (47), and/or wherein a camera arranged above the conveying device (15) is directed towards the conveying device (15).

13. The tablet portioning device according to any one of claims 4 to 12, **characterized in that** in the transport position of the conveying device (15), the dispensing device (11) is spaced in the conveying direction by a distance A, which is at least equal to the distance D, from a second deflection region (25c) of the studded belt (25).

14. The tablet portioning device (1) according to one of the preceding claims, **characterized by** a packing device for packing tablet portions, wherein the packing device is arranged below the dispensing device (11) when in a use position and receives the tablet portions from the dispensing device (11), wherein the packing device can be moved from the use position to a stow position to clear the region below the collection device (15), wherein, in the stow position of the packing device, the dispensing device (11) can be connected with the packaging device (7) via the conveying device (15).

15. The tablet portioning device according to any one of claims 1 to 14, **characterized in that** the conveying device (15) comprises a dispensing unit (33) via which the tablet portions are transferred to the packaging device (7) in portions.

## Revendications

1. Dispositif doseur de comprimés (1) doté de plusieurs tiroirs à comprimés (3), doté d'un dispositif collecteur (5) qui est disposé en dessous des tiroirs à comprimés (3) et est muni d'un dispositif distributeur (11), et doté d'un dispositif de conditionnement (7) destiné à conditionner par doses les doses de comprimés, dans lequel le dispositif collecteur (5) reçoit des comprimés depuis les tiroirs à comprimés (3) et les distribue comme doses de comprimés par le biais du dispositif distributeur (11), dans lequel un dispositif convoyeur (15) doté de plusieurs compartiments convoyeurs (29) et s'étendant dans une direction de convoyage relie le dispositif distributeur (11) au dispositif de conditionnement (7), dans lequel le dispositif distributeur (11) distribue respectivement une dose de comprimés dans un des compartiments convoyeurs (29) et le dispositif convoyeur (15) transporte les doses de comprimés vers le dispositif de conditionnement (7),
**caractérisé en ce que** le dispositif convoyeur (15) est disposé sur un dispositif de rail (17) et peut être déplacé dans une direction horizontale transversale à la direction de convoyage du dispositif convoyeur (15) par le biais du dispositif de rail (17) depuis une position de transport, où le dispositif convoyeur transporte les doses de comprimés du dispositif distributeur (11) au dispositif de conditionnement (7), jusqu'à une position de stationnement.

2. Dispositif doseur de comprimés selon la revendication 1, **caractérisé en ce que** le dispositif distributeur (11) comporte une sortie pilotable, par le biais de laquelle les doses de comprimés sont distribuées de manière pilotable, dans lequel la sortie pilotable comporte de préférence une plaque d'obturation pivotante, et/ou **en ce que** le dispositif collecteur (5) comporte un dispositif d'entonnoir (9), lequel est relié au dispositif distributeur (11).

3. Dispositif doseur de comprimés selon la revendication 1 ou 2, **caractérisé par** un dispositif emballeur déplaçable, lequel peut, dans la position de stationnement du dispositif convoyeur (15), être disposé en dessous du dispositif distributeur (11) pour la réception de doses de comprimés depuis le dispositif distributeur (11), dans lequel le dispositif emballeur peut être déplacé depuis une position d'utilisation en dessous du dispositif distributeur (11) vers une position de rangement afin de libérer une zone en dessous du dispositif collecteur (5) pour le dispositif convoyeur.

4. Dispositif doseur de comprimés selon l'une des revendications 1 à 3, **caractérisé en ce que** le dispositif convoyeur (15) est constitué d'une bande à tasseaux périphérique (25) dotée de tasseaux (27) en saillie et écartés l'un de l'autre d'une distance D, dans lequel deux tasseaux adjacents respectifs (27) délimitent respectivement un des compartiments convoyeurs (29) sur au moins deux côtés, dans lequel le dispositif convoyeur (15) comporte de préférence des parois latérales (31), lesquelles sont disposées sur les côtés de la bande à tasseaux (25) et délimitent sur deux côtés ultérieurs les compartiments convoyeurs (29) au moins dans une zone de transport de la bande à tasseaux (25) .

5. Dispositif doseur de comprimés selon la revendication 4, **caractérisé en ce que** le dispositif convoyeur (15) comporte un moyen distributeur (33), par le biais duquel les doses de comprimés sont transférées par doses au dispositif de conditionnement (7) et **en ce que** le moyen distributeur (33) est disposé sur une première zone de renvoi (25a) de la bande à tasseaux (25).

6. Dispositif doseur de comprimés selon la revendication 5, **caractérisé en ce que** le moyen distributeur (33) appuie sur les parois latérales (31) au moins dans la première zone de renvoi (25a) et relie celles-ci, dans lequel le moyen distributeur (33) recouvre un compartiment convoyeur (29) se trouvant dans la première zone de renvoi (25a), dans lequel le moyen distributeur (33) s'étend de préférence à partir de la première zone de renvoi (25a) avec une longueur L en dessous d'un brin inférieur (25b) de la bande à tasseaux (25) et forme une zone de transfert (35), dans lequel la longueur L correspond au moins à la distance D entre deux tasseaux adjacents (27), dans lequel le moyen distributeur (33) comporte une ouverture de transfert (37) dans la zone de transfert (35), dans lequel l'ouverture de transfert (37) est de préférence adaptée à la taille d'une ouverture d'un conditionnement (35) ou à la taille d'une ouverture de remplissage du dispositif de conditionnement (7).

7. Dispositif doseur de comprimés selon l'une des revendications 4 à 6, **caractérisé en ce qu'**une puce RFID (39) est disposée dans chaque tasseau (27).

8. Dispositif doseur de comprimés selon la revendication 1 à 7, **caractérisé en ce que** le dispositif de conditionnement (7) comporte plusieurs compartiments de remplissage (46) dotés chacun d'une ouverture de remplissage, lesquels comportent un arrangement adapté à un conditionnement (55) doté de plusieurs compartiments (55a), dans lequel les fonds des compartiments de remplissage (46) sont formés par une ou plusieurs glissières, par le biais de laquelle ou desquelles les compartiments de remplissage (46) peuvent être ouverts sur la face inférieure et dans lequel les doses de comprimés peuvent respectivement être introduites dans un des compartiments de remplissage (46).

9. Dispositif doseur de comprimés selon la revendication 8, **caractérisé en ce que** les compartiments de remplissage (46) sont disposés sur un plateau (45) horizontalement mobile dans deux directions, dans lequel le dispositif de conditionnement (7) comporte de préférence un maintien de conditionnement (53) destiné à maintenir un conditionnement (55) dans une position de remplissage, dans lequel le plateau (45) est positionnable au-dessus du maintien de conditionnement (53) pour le remplissage du conditionnement (55).

10. Dispositif doseur de comprimés selon la revendication 9, **caractérisé en ce que** le maintien de conditionnement (53) transporte après remplissage le conditionnement (55) depuis la position de remplissage jusqu'à une position d'enlèvement, dans lequel le dispositif de conditionnement (7) comporte de préférence un dispositif d'enlèvement (57), sur lequel le conditionnement (55) peut être scellé, dans lequel la position d'enlèvement du conditionnement (55) se trouve dans le dispositif d'enlèvement (57).

11. Dispositif doseur de comprimés selon l'une des revendications 8 à 10, **caractérisé en ce que** le plateau (45) comporte un compartiment à rebuts (51).

12. Dispositif doseur de comprimés selon l'une des revendications précédentes, **caractérisé en ce que** le plateau (45) est fixé à un dispositif d'entraînement (49) par le biais de deux supports en L (47) disposés sur le plateau (45) de manière latéralement opposée, dans lequel la ou les glissière(s) est ou sont déplaçable(s) entre les supports en L (47) afin d'ouvrir les fonds des compartiments de remplissage (46) et/ou dans lequel une caméra disposée au-dessus du dispositif convoyeur (15) est pointée sur le dispositif convoyeur (15).

13. Dispositif doseur de comprimés selon l'une des revendications 4 à 12, **caractérisé en ce que** dans la position de transport du dispositif convoyeur (15) le dispositif distributeur (11) est écarté par rapport à une deuxième zone de renvoi (25c) de la bande à tasseaux (25) d'une distance A, laquelle est au moins égale à la distance D.

14. Dispositif doseur de comprimés (1) selon l'une des revendications précédentes, **caractérisé par** un dispositif emballeur destiné à emballer des doses de comprimés, dans lequel le dispositif emballeur est disposé en dessous du dispositif distributeur (11) dans une position d'utilisation et reçoit les doses de comprimés depuis le dispositif distributeur (11), dans lequel le dispositif emballeur peut être déplacé depuis la position d'utilisation vers une position de rangement afin de libérer une zone en dessous du dispositif collecteur (15), dans lequel dans la position de rangement du dispositif emballeur, le dispositif distributeur (11) peut être relié au dispositif de conditionnement (7) par le biais du dispositif convoyeur (15).

15. Dispositif doseur de comprimés selon l'une des revendications 1 à 14, **caractérisé en ce que** le dispositif convoyeur (15) comporte un moyen distributeur (33), par le biais duquel les doses de comprimés sont transférées par doses au dispositif de conditionnement (7).
